(19) Europäisches Patentamt
European Patent Office
Office européen des brevets

(11) EP 2 498 392 A1

(12) EUROPEAN PATENT APPLICATION
published in accordance with Art. 153(4) EPC

(43) Date of publication:
12.09.2012 Bulletin 2012/37

(51) Int Cl.:
*H02N 2/00* (2006.01) *G02B 7/04* (2006.01)

(21) Application number: 10828065.2

(22) Date of filing: 21.10.2010

(86) International application number:
PCT/JP2010/006246

(87) International publication number:
WO 2011/055504 (12.05.2011 Gazette 2011/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 04.11.2009 JP 2009252794
04.11.2009 JP 2009252796

(71) Applicant: Konica Minolta Advanced Layers, Inc.
Hachioji-shi
Tokyo 192-8505 (JP)

(72) Inventors:
• ONISHI, Satoshi
Hachioji-shi
Tokyo 192-8505 (JP)

• KONISHI, Hirotoshi
Hachioji-shi
Tokyo 192-8505 (JP)
• MORITA, Mitsuhiko
Hachioji-shi
Tokyo 192-8505 (JP)

(74) Representative: HOFFMANN EITLE
Patent- und Rechtsanwälte
Arabellastrasse 4
81925 München (DE)

(54) **DRIVE MECHANISM AND IMAGING DEVICE USING THE SAME**

(57) A drive mechanism and an imaging device according to the present invention each include: an ultrasonic linear actuator 4 provided with a rod 42 that moves reciprocally in response to expansion/contraction of a piezoelectric element 41; and a first group unit 2 serving as an example of a moving body that engages with the rod 42 with a prescribed frictional force. The moving body (first group unit 2) is provided with a holding member 24, a pressing member 30 or other member that engages with the rod 42 in such a way that fluctuation in the frictional force is suppressed, and drive performance is stabilized. As a consequence, the drive mechanism and the imaging device according to the present invention can suppress fluctuation in the frictional force (gripping force) of the moving body in the ultrasonic linear actuator 4, making it possible to stabilize drive performance.

FIG.3

**Description**

Technical Field

The present invention relates to a drive mechanism suitably used for an imaging device of a portable telephone, for example, and an imaging device using this drive mechanism, and more particularly to the drive mechanism which uses an ultrasonic linear actuator constituted by a SIDM (Smooth Impact Drive Mechanism®) for implementing auto focus and zoom functions.

Background Art

In a compact lens unit used for the imaging device of a portable telephone, a drive mechanism using the ultrasonic linear actuator has been developed into practical use. This ultrasonic linear actuator transfers the expansion/contraction of a piezoelectric element to a rod, and moves the moving lens group which engages with the rod with a prescribed frictional force using the difference of velocity of the piezoelectric element upon expansion and contraction. In the case of this ultrasonic linear actuator, if the rod is expanded slowly, the moving lens group engaging with the rod with a frictional force moves responding to the expansion, and if the rod is contracted instantaneously exceeding the prescribed frictional force, the moving lens group remains in the expansion position. By repeating such expansion and contraction of the rod, the ultrasonic linear actuator can move the moving lens group in the axis direction of the rod. If the rod of this ultrasonic linear actuator is set in the optical axis direction of the lens, and a holding member of the lens group to be moved is engaged with the rod, the auto focus and zoom functions can be implemented.

Concerning the ultrasonic linear actuator, Patent Document 1 discloses that, as Fig. 29 illustrates, a moving body main portion 1001 holds (grips) a rod 1004 of an ultrasonic linear actuator between a V-groove 1002 and a processing member 1003 being a spring component and facing the V-groove 1002. A base 1003a of the pressing member 1003 is fixed to a moving body main portion 1001 (extending from the moving body main portion 1001), and an open end 1003b thereof presses against the rod 1004.

In the case of this ultrasonic linear actuator, the length of the portion which functions as a spring of the pressing member 1003 (from the fixed point to the contact point with the rod 1004 of the moving body main portion 1001) is short, and the spring sensitivity, that is a ratio of change of the pressing force of the spring with respect to the change of flexure, is high. Therefore if an error occurs in component dimensions, the frictional force (gripping force) of the ultrasonic linear actuator fluctuates, and drive performance (e.g. velocity) becomes unstable. If the pressing member 1003 is a flat plate or a plate of which cross-section is V-shaped, that is separated from the moving body main portion 1001, and a helical spring is installed between the plate and the edge of the V-groove 1002 of the moving body main portion 1001, a relatively stable frictional force (gripping force) can be generated. However in the case of the compact imaging device used for a portable telephone, this increases the space around the actuator occupied by the helical spring, which interferes with the downsizing of the compact imaging device, and makes assembly difficult.

Concerning the ultrasonic linear actuator, Patent Document 2 discloses that, as Fig. 30 illustrates, an ultrasonic linear actuator 1104 constituted by a piezoelectric element 1102 and a rod 1103 is disposed in a lens holder 1101, and a receiving unit 1106 on the side of a base 1105, which engages with the rod 1103, is comprised of a block 1108 having a groove 107 which has a V-shape in the cross-section perpendicular to the axis, and a plate spring 1109 which has a V-shape in the cross-section perpendicular to the axis.

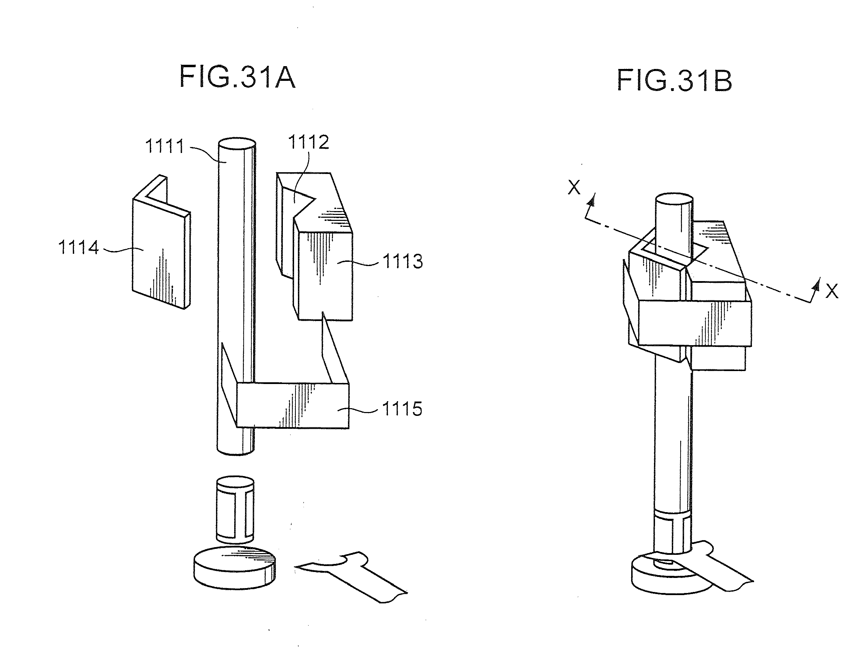

Patent Document 3 also discloses that, as Fig. 31 illustrates, a rod 1111 is gripped between a moving body 1113 having a groove 1112 which has a V-shape in the cross-section perpendicular to the axis, and a plate body 1114 which has a V-shape in the cross-section perpendicular to the axis, and a U-shaped spring 1115 applies resilience (frictional force) on these elements. Fig. 31A is an exploded perspective view, and Fig. 31B is a perspective view depicting an assembled state.

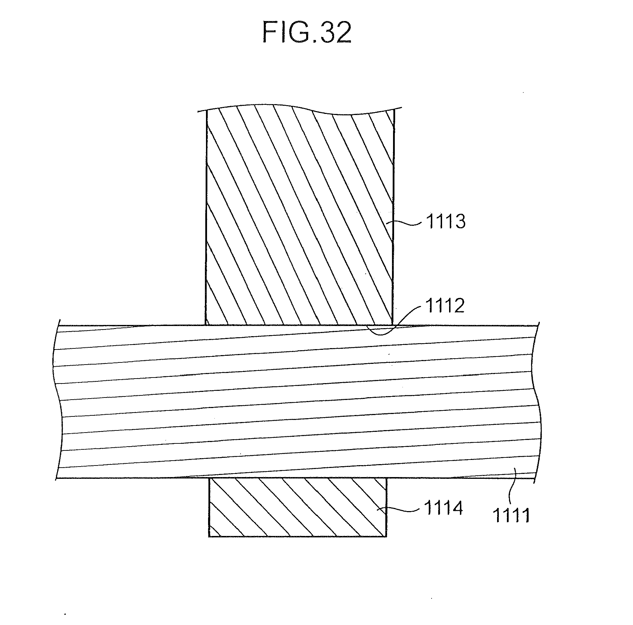

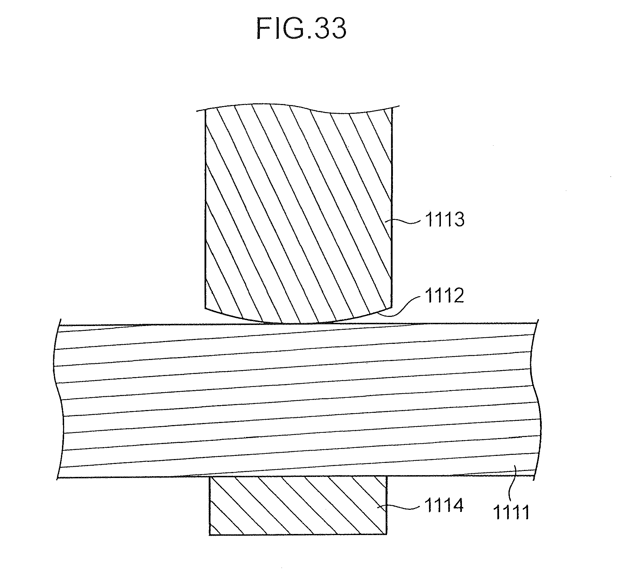

In this ultrasonic linear actuator, the two surfaces constituting the V-shape are planes. Where the rod contacts the V-shaped two planes at two lines, and for example, Fig. 32 illustrates a cross-section of one contact surface sectioned at the cutting plane line X-X in Fig. 31B. If the two surfaces 1112 contacting the rod 1111 of the moving body 1113 curve, as illustrated in Fig. 33, due to the dispersion in molding and processing, the contacting state between the moving body 1113 and the rod 1111 is not stabilized, and the drive performance may fluctuate (e.g. uneven velocity, jerky operation), or if the moving body 1113 is a lens unit, optical performance may deteriorate due to the tilting of the moving body 1113.

    Patent Document 1: Japanese Patent Application Laid-Open No. 2007- 49878
    Patent Document 2: Japanese Patent Application Laid-Open No. 2009-124857
    Patent Document 3: Japanese Patent Application Laid-Open No. 2006-311794

Summary of the Invention

With the foregoing in view, it is an object of the present invention to provide a drive mechanism which uses an ultrasonic linear actuator, and can suppress fluctuation in the frictional force (gripping force) of the moving body in the ultrasonic linear actuator and stabilize the drive performance, and an imaging device using the drive mechanism.

A drive mechanism and an imaging device according to the present invention comprise: an ultrasonic actuator provided with a rod that moves reciprocally in response to expansion/contraction of a piezoelectric element; and a moving body that engages with the rod with a prescribed frictional force, wherein the moving body is provided with a member that engages with the rod in such a way that fluctuation of the frictional force is suppressed, and drive performance is stabilized. Consequently, the drive mechanism and the imaging device according to the present invention can suppress fluctuation of the frictional force (gripping force) in the ultrasonic linear actuator, and stabilize the drive performance.

The above and further objects, features and advantages of the present invention will be more apparent from the following detailed description and the accompanying drawings.

Brief Description of the Drawings

[Fig. 1] Fig. 1 is a longitudinal sectional view of an imaging device according to an embodiment of the present invention.

[Fig. 2] Fig. 2 is an exploded perspective view of the imaging device according to Fig. 1.

[Fig. 3] Fig. 3 is a perspective view, which is a detailed view of Fig. 2.

[Fig. 4] Fig. 4 is an enlarged view of the cross-section, sectioned at the cutting plane line IV-IV in Fig. 1, depicting a bonding structure of the lens unit to the holding member according to an embodiment of the invention.

[Fig. 5] Fig. 5 is a cross-sectional view depicting a structure when two lenses are used in Fig. 4.

[Fig. 6] Fig. 6 is a cross-sectional view depicting a structure when the present invention is used for bonding of the lens and the lens frame in Fig. 4.

[Fig. 7] Fig. 7 is an enlarged cross-sectional view depicting the portion indicated by the reference symbol α in Fig. 1, depicting a ventilation structure according to an embodiment of the present invention.

[Fig. 8] Fig. 8 depicts a part of an optical element.

[Fig. 9] Fig. 9 is a perspective view depicting an adhesive coating state to implement the ventilation structure in Fig. 7.

[Fig. 10] Fig. 10 is a perspective view depicting a front and rear frames assembled in the imaging device in Fig. 1, excluding the internal structure.

[Fig. 11] Fig. 11 depicts a rear frame in Fig. 10.

[Fig. 12] Fig. 12 depicts a front frame in Fig. 10.

[Fig. 13] Fig. 13 is a cross-sectional view depicting a structure of a jig for adjusting a mounting angle of the ultrasonic linear actuator and performing bonding.

[Fig. 14] Fig. 14 is a schematic cross-sectional view enlarging a state of the rear frame upon molding.

[Fig. 15] Fig. 15 is a schematic plan view depicting a state of the rear frame upon molding.

[Fig. 16] Fig. 16 is a schematic plan view depicting another state of the rear frame upon molding.

[Fig. 17] Fig. 17 is a cross-sectional view depicting another frame structure upon molding.

[Fig. 18] Fig. 18 is a schematic cross-sectional view enlarging a state of the front frame upon molding.

[Fig. 19] Fig. 19 is a schematic cross-sectional view depicting a state of assembling the ultrasonic linear actuator on the front frame.

[Fig. 20] Fig. 20 is a cross-sectional view depicting a routing of the lead wire of the ultrasonic linear actuator according to an embodiment of the present invention.

[Fig. 21] Fig. 21 is a cross-sectional view sectioned at the cutting plane line XXI-XXI in Fig. 20.

[Fig. 22] Fig. 22 is a front view depicting a holding structure of the first group unit.

[Fig. 23] Fig. 23 is an exploded perspective view of Fig. 22.

[Fig. 24] Fig. 24 is a front view depicting a holding structure of another pressing member corresponding to Fig. 22.

[Fig. 25] Fig. 25 is a cross-sectional view sectioned at the cutting plane line XXV-XXV in Fig. 22.

[Fig. 26] Fig. 26 is a front view depicting a holding structure by another holding member and pressing member corresponding to Fig. 22.

[Fig. 27] Fig. 27 is a diagram depicting a holding structure using another pressing member corresponding to Fig. 25.

[Fig. 28] Fig. 28 is a diagram depicting a holding structure using another pressing member corresponding to Fig. 25.

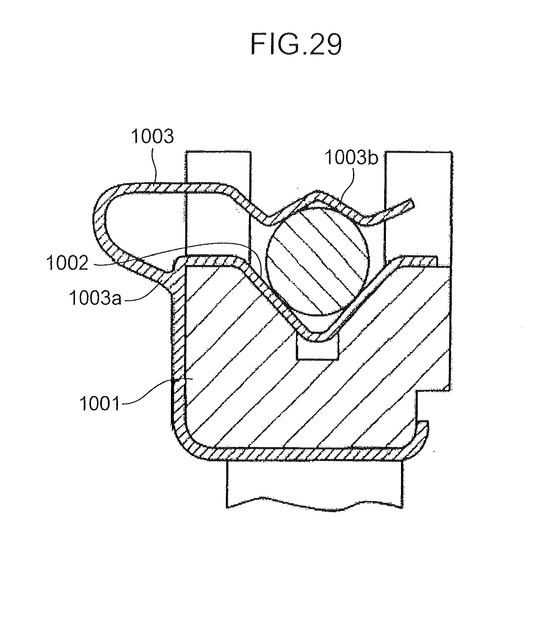

[Fig. 29] Fig. 29 is a cross-sectional view depicting an engaging structure of the moving body with the ultrasonic linear actuator according to a typical prior art.

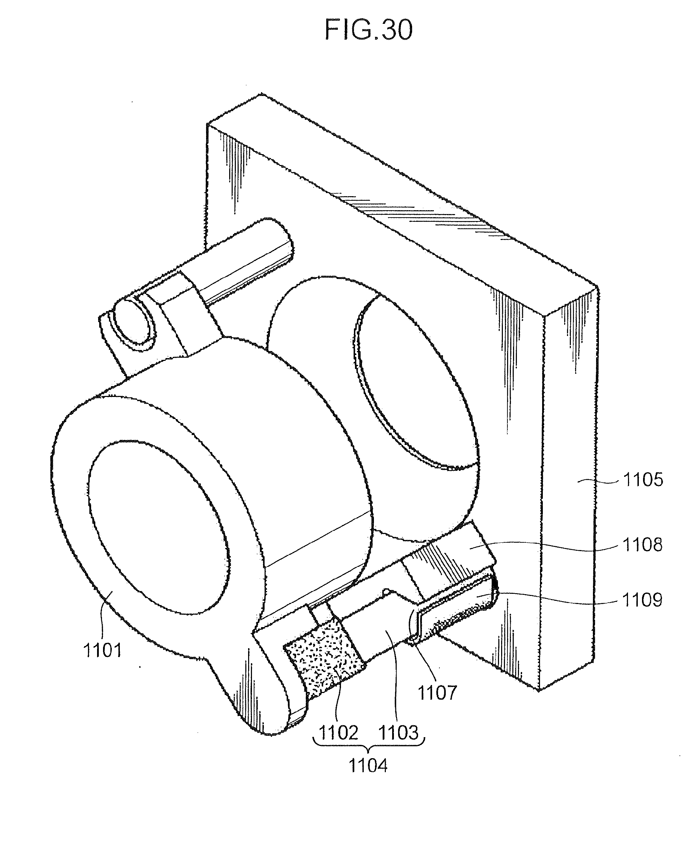

[Fig. 30] Fig. 30 is a perspective view depicting a prior art of the engaging portion of the moving body with the ultrasonic linear actuator.

[Fig. 31] Fig. 31 is a perspective view depicting another prior art of the engaging portion of the moving body with the ultrasonic linear actuator.

[Fig. 32] Fig. 32 is a cross-sectional view sectioned at the cutting plane line X-X in Fig. 31B.

[Fig. 33] Fig. 33 is a cross-sectional view depicting a prior art corresponding to Fig. 32.

Best Mode for Carrying Out the Invention

An embodiment of the present invention will be described with reference to the drawings. In each drawing, composing elements denoted with a same reference symbol are identical, of which description may be omitted. In this description, a reference symbol without subscript denotes the generic name of the composing element, and a subscript is attached to a reference symbol if an individual composing element is denoted.

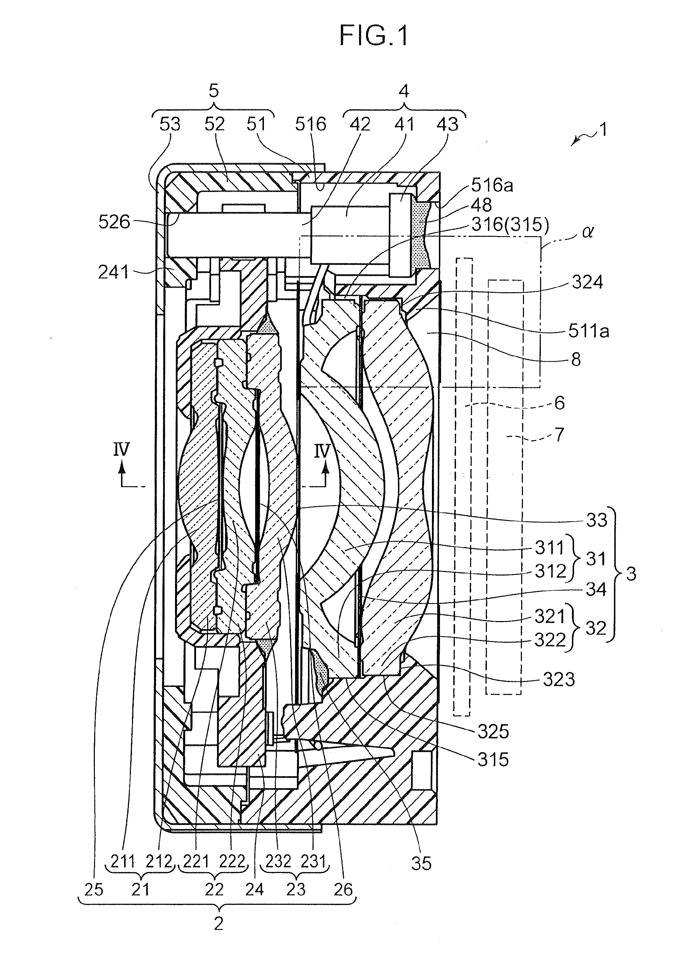

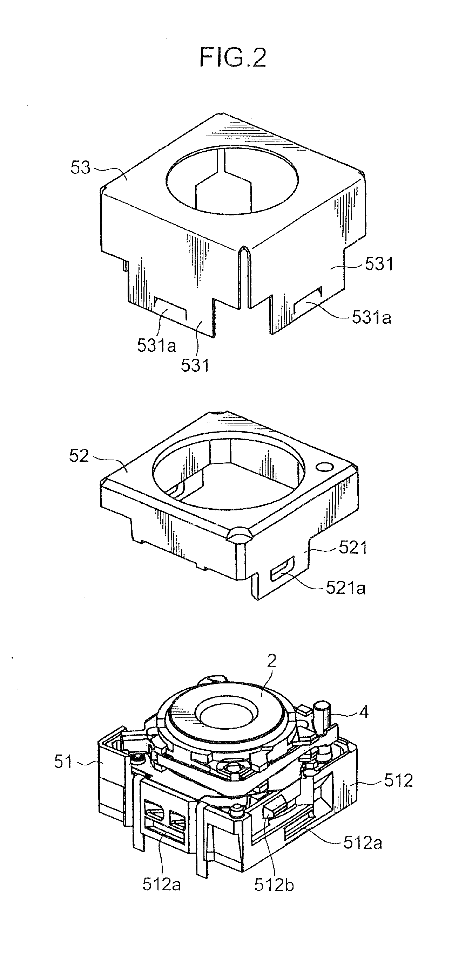

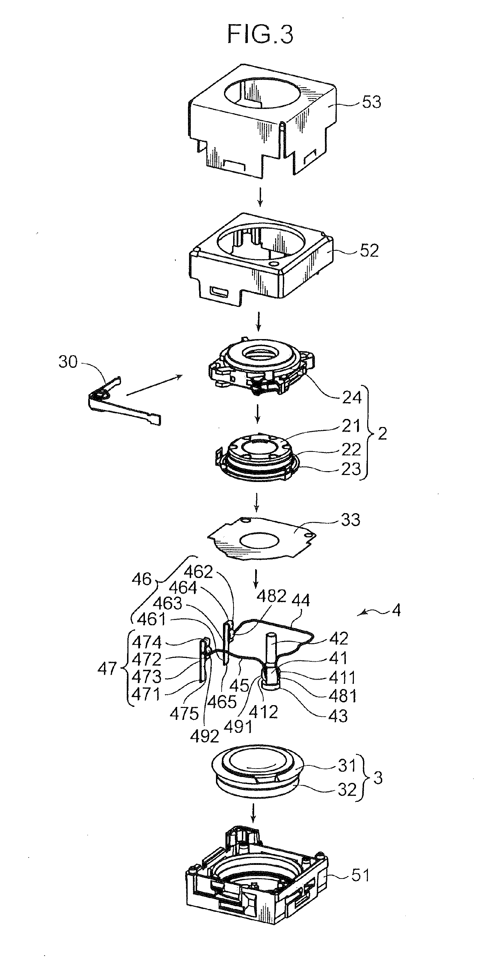

Fig. 1 is a longitudinal sectional view of an imaging device 1 according to an embodiment of the present invention. Fig. 2 is an exploded perspective view thereof, and Fig. 3 is a perspective view, which is a detailed view of Fig. 2. As Fig. 1 to Fig. 3 illustrate, this imaging device 1 comprises: a first group unit 2 which is a moving lens unit; a second group unit 3 which is a fixed lens unit; an ultrasonic linear actuator 4 which drives the first group unit 2 in the optical axis direction; an enclosure 5 which houses the first group unit 2, second group unit 3 and ultrasonic linear actuator 4; a filter 6; and a picture element 7. The imaging device 1 is suitably installed in a terminal device of a portable telephone.

The picture element 7 is constituted by a CCD type or a CMOS type image sensor, and is mounted on a printed circuit board on the terminal device side. The filter 6 is constituted by an infrared cut-off filter, which is integrated with the picture element 7. Including Fig. 2 and Fig. 3, the filter 6 and the picture element 7 will be omitted in the illustrations herein below.

The first group unit 2 and the second group unit 3 constitute a lens unit, which has five lenses grouped into two, and has a fixed focus. The ultrasonic linear actuator 4 drives the first group unit 2 for implementing auto focus. The first group unit 2 comprises: three optical elements 21, 22, 23; a holding member 24 for holding these optical elements 21, 22 and 23; light shielding plates 25 and 26; and a later mentioned pressing member 30. The second group unit 3 comprises: two optical element 31 and 32; and light shielding plates 33 and 34, and these optical elements 31 and 32 are held in the later mentioned rear frame 51, which is a holding member.

Each optical element 21, 22, 23; 31, 32 is constituted by plastic lenses, for example, and comprise a lens unit 211, 221, 231; 311, 321, for forming an optical path, and a holding unit 212, 222, 232; 312, 322 for holding the lens unit 211, 221, 231; 311, 321 from the periphery side, and these composing elements are integrated. Between each lens unit 211, 221, 231, 311 and 321, the light shielding plates 25, 26, 33 and 34 are installed in order to shield unnecessary light respectively.

The ultrasonic linear actuator 4 used as a drive mechanism of the first group unit 2, which is a moving lens group, is an actuator suitable for downsizing, disclosed by the present applicant in Japanese Patent Application Laid-Open No. 2001-268951, for example, is called an SIDM (Smooth Impact Drive Mechanism®). In this ultrasonic linear actuator 4, a rod 42 is connected to one end of a piezoelectric element 41 which expands/contracts in the axis direction, a weight 43 is connected to the other hand of the piezoelectric element 41, the rod 42 moves reciprocally by the expansion/contraction of the piezoelectric element 41, and the first group unit 2 is moved in the optical axis direction by the holding element 24 of the first group unit 2 engaging with the rod 42 with a prescribed frictional force.

To be more specific, in this ultrasonic linear actuator 4, the displacement of the piezoelectric element 41 becomes a triangular waveform by applying a rectangular wave to the piezoelectric element 41, and if the duty of the rectangular wave is changed, a triangular wave of which inclination is different upon ascending and descending in amplitude is generated. The drive mechanism of the ultrasonic linear actuator 4 utilizes this phenomena. For example, if the rod 42 is expanded slowly, the first group unit 2, which is engaged with the rod 42 with friction, also moves in response to the expansion, and if the rod 42 is contracted instantaneously exceeding the prescribed frictional force, the first group unit 2 remains in the expansion position. By repeating such expansion and contraction of the rod 42, the first group unit 2 can be moved in the axis direction of the rod 42.

The weight 43 is for generating the displacement due to the expansion/contraction of the piezoelectric element 41 only on the rod 42 side, and if the function of the weight 43 can be implemented by another means, such as installing at the other end of the piezoelectric element 41 on the enclosure 5, then the weight 43 may be omitted.

The piezoelectric element 41 of the ultrasonic actuator 4 is configured such that a plurality of piezoelectric layers are stacked, and an electrode of each piezoelectric element is commonly led to a pair of side faces. The electrodes 411 and 412 on the side faces are connected to the external connection terminals 46 and 47 via individual lead wires 44 and 45 respectively. The tips 461 and 471 of the external connection terminals 46 and 47 are soldered to the printed circuit board of the terminal device of the portable telephone, or are inserted into the connectors mounted on this printed circuit board. Installation of the ultrasonic actuator 4 and the routing of the wires will be described later.

The enclosure 5 comprises a rear frame 51 which is a resin molded product, a front frame 52 which forms a box by combining with the rear frame 51, and a front cover 53 which is sheet metal, and is used for electromagnetic shielding and for appearance. The structure of the enclosure 5 will also be described later.

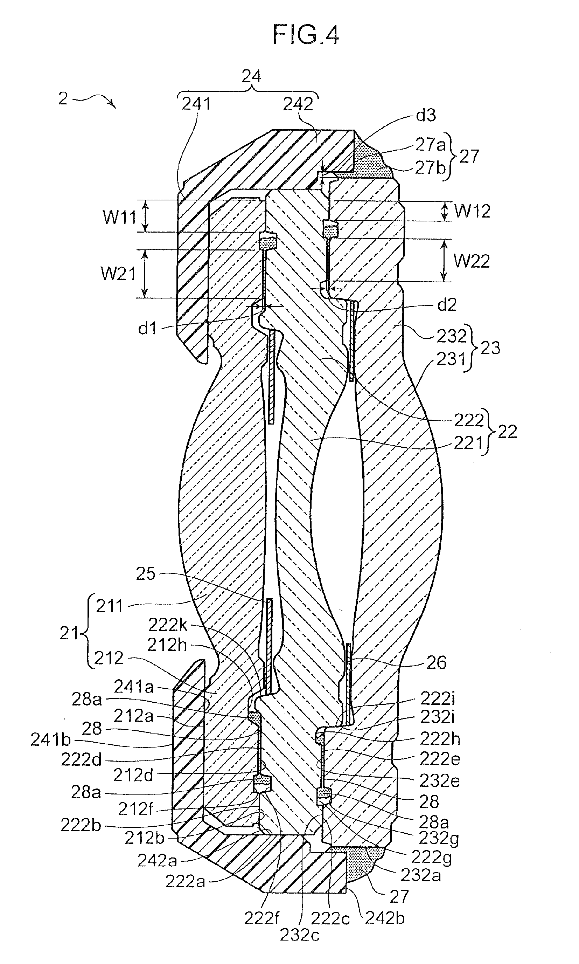

Fig. 4 is an enlarged view of the cross-section sectioned at the cutting plane line IV-IV in Fig. 1. Fig. 4 is used for describing the bonding of the optical elements 21, 22 and 23 in the first group unit 2, and the bonding of the bonded lens block to the holding member 24. Upon assembling the first group unit 2, the light shielding plate 26 is inserted between the optical elements 22 and 23, and the optical elements 22 and 23 are joined and bonded. Then the light shielding plate 25 is inserted between the optical elements 21 and 22, and after aligning the optical element 21, the optical elements 21 and 22 are joined and bonded, so as to complete the lens block.

The lens block is then inserted into a cylindrical holding member 24 from the optical element 21 side, and in the state where a front end face 212a of a holding unit 212 is contacting a rear face (image side surface) 241a of a pressing plate 241, which is formed as an inner flange on the front end (object side) of the holding member 24, and an outer circumferential surface 222a of the holding unit 222 of the optical element 22 is contacting the inner circumferential surface 242a of a cylindrical portion 242 of the holding member 24, an outer circumferential surface 232a of a holding unit 232 of the optical element 23, located at the farthest rear side (image side) and an end face 242b, of the cylindrical portion 242 are bonded and secured by the adhesive 27, and the first group unit 2 completed.

In the first group unit 2 constituted by a plurality of optical elements 21, 22 and 23 which are bonded together, the holding units 212, 222 and 232 have the contact surfaces 212b; 222b and 222c; 232c which determine a distance between the lens units 211, 221 and 231 in the adjacent optical elements 21, 22 and 23, and the adhesive coating surfaces 212d; 222d and 222e; 232e which face each other with predetermined distances d1 and d2, In these boundaries, the grooves 212f; 222f and 222g; 232g, extending in circumferential directions, are formed in order to prevent the entry of the adhesive 28 from the adhesive coating surfaces 212d; 222d, and 222e; 232e to the contact surfaces 212b; 222b and 222c; 232c. The contact surfaces 212b, 222b; 222c, and 232c, which face each other, are formed in circles of which widths in the diameter direction are W11 and W12 respectively, and the adhesive coating surfaces 212d, 222d; 222e and 232e are formed in circles of which widths in the diameter direction are W21 and W22. The distances d1 and d2 are set from 0.005 to 0.01 mm, for example, and the widths W21 and W22 are set to 0.4 mm , for example.

According to this configuration, adhesive 28 is coated to at least one of the adhesive coating surfaces 212d and 222d; 222e; 232e which face each other in the holding units 212, 222 and 232, then adjacent optical elements 21, 22 and 23 are pressed to each other and the adhesive 28 is cured by heating or UV irradiation, whereby the optical elements 21, 22 and 23 can be joined and bonded simply and firmly. Upon the above mentioned processing, excess adhesive flows into the grooves 212f; 222f and 222g; 232g as the reference symbol 28a indicates, whereby extrusion of the adhesive 28 into the contact surfaces 212b; 222b and 222c; 232c can be prevented, and optical performance can be ensured without concern for error in the distances between the lens units 21, 22 and 23.

If the contact surfaces 212b; 222b and 222c; 232c are disposed on the outer circumference side and the adhesive coating surfaces 212d; 222d and 222e and 232e are disposed on the inner circumference side in the holding units 212, 222 and 232, then the distance between the lens units 211, 221 and 231 are determined on the outer circumference side of the holding units 212, 222 and 232, therefore each distance (span) between the contact surfaces 212b, 222b; 222c and 232c becomes wider than the case of determining the distance on the inner circumference side. Hence an error in distance (including inclination) and decentering due to a manufacturing error can be decreased, and extrusion of excessive adhesive 28a from the outer circumference side of the holding units 212, 222 and 232, can be prevented, and as a result, the bonded optical elements 21, 22 and 23 can be assembled in the holding member 24 accurately.

In the holding units 212 and 222, the grooves 212h and 222h are also formed on the lens units 211, 221 and 231 side of the adhesive coating surfaces 212d and 222d; 222e; 232e which face each other. By forming the grooves 212h and 222h near the innermost circumference of the holding units 212 and 222 like this, an extrusion of excess adhesive indicated by the reference symbol 28a into the lens units 211, 221 and 231 side can be prevented, and optical performance can be ensured.

Protrusions or a ridge 222k which fit(s) into the groove 212h, is/are formed in the holding unit 222 which faces the groove 212h formed in a circle in the holding unit 212, and the inner diameter of the groove 212h is formed to be longer than the outer diameter of the protrusions or the ridge 222k by prescribed dimensions. In other words, when the optical elements 21 and 22 are abutted and bonded, the groove 212h where excess adhesive enters as indicated by the reference symbol 28a is formed in one of the optical elements 21 and 22 to be in a slightly larger circle, and the protrusions or the ridge 222k is/are formed on the other optical element in a slightly smaller circle, so that when these optical elements are bonded, the protrusions or the ridge 222k is/are inserted into the groove 212h without allowing the excessive adhesive 28a to extrude out of the groove 212h by the protrusions or the ridge 222k. The relationship of the protrusion(s) or the ridge 222k and the groove 212h is that the outer diameter of the protrusions or the ridge 222k is larger than the inner diameter of the groove 212h by prescribed dimensions, and a shift in a direction perpendicular to the optical axis is allowable between the adjacent optical elements 21 and 22.

Therefore in the first group unit 2 of the imaging device 1 of this embodiment, the optical element 21 can be aligned by adjusting the above mentioned shift, as described later, and the adhesive 28 is cured after this alignment so as to secure the optical elements 21 and 22. This means that a conventional lens frame for adjustment is not required.

The optical elements 21, 22 and 23 are constituted by plastic lenses, and each holding element 212, 222 and 232 is constituted by a holding piece protruding out of at least a part of the outer circumference edge of the lens units 211, 221 and 231 by integrated molding, and the holding units 212, 222 and 232 are joined and bonded with each other. If this lens unit is constituted by a glass lens, a holding frame to be the holding unit is frequently installed separately, and this holding frame is bonded and secured, as mentioned above, but if the optical elements 21, 22 and 23 are joined and bonded with each other, the holding frame as a separate component need not be used for bonding the optical elements 21, 22 and 23 with each other.

In order to configure the lens unit by holding the plurality of optical elements 21, 22 ands 23 with the cylindrical holding member 24 in the first group unit 2 mentioned above, the optical elements 21, 22 and 23 may be bonded and secured with each other as a lens block in advance, then the optical element 22, which fits into the holding member 24, and the optical member 23 to be bonded, can be separated. Using this between the optical element 23 and the holding member 24 to be bonded, adhesive reservoirs 27b, where adhesive 27 is thickly applied, and micro-distances d3 therebetween, are formed as an adhesive layer 27a.

To be specific, upon inserting the optical elements 21, 22 and 23 constituted by plastic lenses into the holding member 24, at least one optical element, preferably the optical element 22, made from a material of which linear expansion coefficient is small, is fitted into the inner circumference surface 242a of the cylindrical holding member 24, that is, engaged with the holding member 24 in the diameter direction. In the rest of the optical elements 21 and 23, on the other hand, optical axis alignment, inclination adjustment and other positioning are performed by being bonded with the optical element 22 in advance to construct the lens block. In at least one of the remainder of the optical elements 21 and 23, preferably the optical element 23 on the rear (image) side, which is inserted in the cylindrical holding element 24 last among optical elements, an outer circumference surface 232a, which is parallel with the inner circumference surface 242a of the holding member 24 with a predetermined micro-distance d3, is formed, and the lens block is bonded with the holding member 24 by filing the adhesive 27 between the inner circumference surface 242a and the outer circumference surface 232a.

The adhesive 27, which is filled between the optical element 23 and the holding member 24, forms the adhesive layer 27a between the inner circumference surface 242a and the outer circumference surface 232a, and forms the adhesive reservoir 27b between the end face 242b of the cylindrical portion 242 and the outer circumference surface 232a. By this configuration, adhesive strength can be improved using the holding force in the shearing direction generated by the adhesive layer 27a, which is formed in a micro-distance d3 between the inner circumferential surface 24a of the holding member 24 and the outer circumferential surface 232a of the optical element 23, which are parallel with each other, therefore such a separate member as a lens presser need not be used, and unnecessary space in the depth direction is not generated as in the case of using a lens presser and caulking. As a result, downsizing and decreasing height can be implemented, while improving reliability by mitigating vibration and impact.

It is preferable that the micro-distance d3 is 0.1 mm or less. If it is 0.1 mm or less, a large holding force can be generated in the adhesive layer 27a in the shearing direction, in other words, in this case, a large shearing force is required to break the adhesion of the adhesive layer 27a, and the lens block is not easily detached from the holding member 24.

Furthermore, step differences 222i and 232i in the optical axis direction are created in the holding units 222 and 232 of the optical element 22 in the middle and the optical element 23 in the rear (image) side, to bond the three optical elements 21, 22 and 23 with each other, so as to fit into each other and to prevent displacement in a direction perpendicular to the optical axis. Hence simply by bonding the adhesive coating surfaces 222e and 232e with each other, alignment can be performed with preventing displacement in a direction perpendicular to the optical axis (diameter direction) between the holding units 222 and 232.

In the holding units 222 and 212 of the optical element 22 in the middle and the optical elements 21 on the front (object) side, on the other hand, the contact surfaces 222b and 212b and the adhesive coating surfaces 222d and 212d have smooth surfaces, so as to allow displacement in a direction perpendicular to the optical axis, and the optical elements 22 and 21 can be aligned with a range allowable by the groove 212h and the protrusions or the ridge 222k. In this case, when the optical element 21 is bonded after the optical elements 22 and 23 are bonded, UV curing-adhesive is coated onto the adhesive coating surfaces 222d and 212d as the adhesive 28, and after alignment, UV is irradiated to solidify the adhesive 28.

When the optical element 21 is bonded with the optical elements 22 and 23, the optical elements 22 and 23 are temporarily assembled with the optical elements 31 and 32 and a member corresponding to the picture element 7 in one jig, and the optical element 21 is mounted on the other jig, and the positions of these two jigs are adjusted while checking the imaging output of the picture element 7 (while checking the optical performance), whereby alignment is performed. In concrete terms, a chart is disposed on the object side, the disposed chart is imaged by the picture element 7 via the temporarily assembled optical elements 21, 22, 23, 31 and 32, and the optical element 21 (the other jig) moves in a direction perpendicular to the optical axis according to the state of the captured image (e.g. blurred on one side). Thus the optical elements 21, 22 and 23 can be integrated while adjusting to implement a prescribed optical performance.

Out of the integrated optical elements 21, 22 and 23 which are integrated as a lens block, the optical element 22 in the middle is inserted into the inner circumferential surface 242a of the cylindrical holding member 24, and the outer circumferential surface 232a of the optical element 23 in the rear (image) side is bonded with the inner circumferential surface 242a of the holding member 24, as mentioned above, whereby the reliability by mitigating vibration and shock can be improved. Upon alignment in the above mentioned three optical elements 21, 22 and 23, the optical element 21 is held in the alignment lens frame, and after positioning thereof is aligned with respect to the lens frame holding the optical elements 22 and 23 together, both lens frames are bonded. According to the present embodiment, however, the optical element 21 is joined and bonded with the optical element 22, as mentioned above, hence the alignment lens frame can be omitted, and size and height can be decreased.

In the above example, a pressing plate 241, to stop sliding, is disposed on the front end (object) side of the holding member 24, and the optical elements 21, 22 and 23, which are integrated as a lens block, are inserted from the rear (image) side of the holding member 24, but if the pressing plate 241 is disposed on the rear (image) side and the optical elements 21, 22 and 23 are inserted from the front (image) side, the optical element 21 on the front (object) side is bonded with the holding member 24.

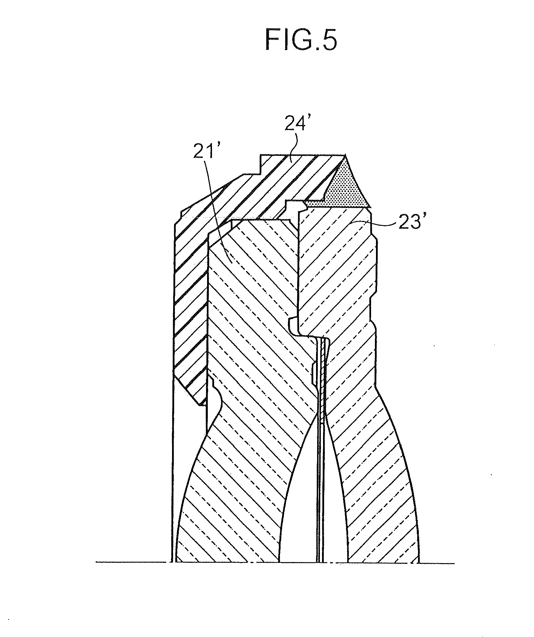

A number of optical elements constituting the first group unit 2 is three, that is, the optical elements 21, 22 and 23, but this number may be two or four or more. In the case of inserting two optical elements from the rear (image) side of the holding member 24, the optical element 21' on the front (object) side fits into the holding member 24', and optical element 23' on the rear (image) side is bonded with the holding member 24' as illustrated in Fig. 5. If the number of optical element is four or more, it is preferable that an optical member, located approximately in the middle, fits into the holding member 24.

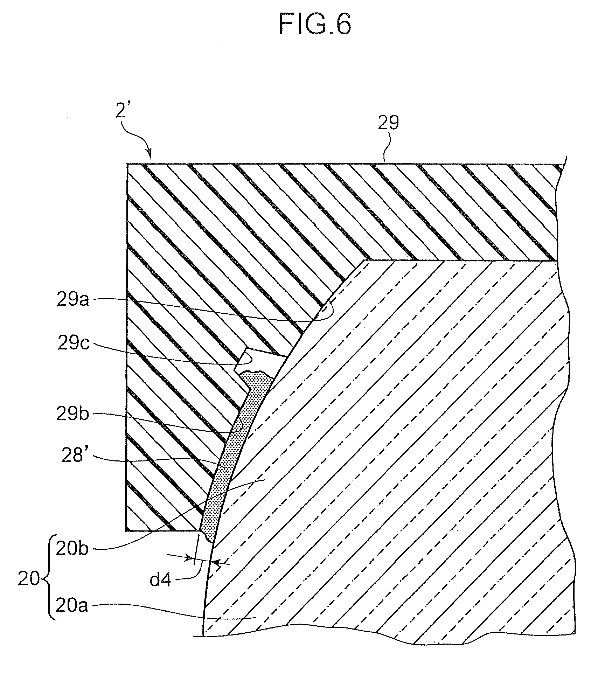

According to the above embodiment, the optical elements 21, 22 and 23 comprise the lens portions 211, 221 and 231 and the holding portions 212, 222 and 232 which extend from the outer circumference edge of the lens portions, and the grooves 212f; 222f and 222g; 232g are formed so as to separate the contact surfaces 212b; 222b and 222c; 232c in the holding portions 212, 222 and 232, and the adhesive coating surfaces 212d; 222d and 222e; 232e, but a single lens 20 may be used and bond with the holding member 29, such as with a lens barrel and a lens frame as illustrated in Fig. 6.

In other words, in a lens unit 2' comprising a single lens 20, which has a lens portion 20a and an outer edge portion 20b which extends from the outer circumference side of the lens portion 20a, and a holding member 29 holding the single lens 20, the holding member 29 has a contact surface 29a which contacts the outer edge portion 20b and performs positioning in the optical axis direction, and an adhesive coating surface 29b, which faces the outer edge portion 20b with a prescribed distance d4, and on which adhesive 28' is coated, and a groove 29c, extending in the circumferential direction, is formed on the boundary between the contact surface 29a and the adhesive coating surface 29b. By this configuration, extrusion of adhesive 28' from the adhesive coating surface 29b to the contact surface 29a side can be prevented, and optical performance can be ensured without concern for error in mounting the single lens 20 on the holding member 29.

In the second group unit 3, an optical element 32, a light shielding plate 34 and an optical element 31 are sequentially inserted into a fitting hole 511 formed in the rear frame 51, and are bonded and secured by adhesive 35. Here in the second group unit 3, which is a fixed lens group and has the picture element 7 on the rear (image) side, a step difference 324 is formed in the holding unit 322 of the optical element 32 on the rear (image) side, in a part of the contact surface 323 with the rear frame 51 which is the holding member, and a notch 326, which is connected from the step difference 324, is formed on the outer circumferential surface 325. Corresponding to this, a notch 316 is formed on the outer circumferential surface 315 of the holding unit 312 of the optical element 31 on the front (object) side as well, and the space 8 between the second group unit 3 and the picture element 7 is connected to the outside only through the step difference 324 and the notches 326 and 316.

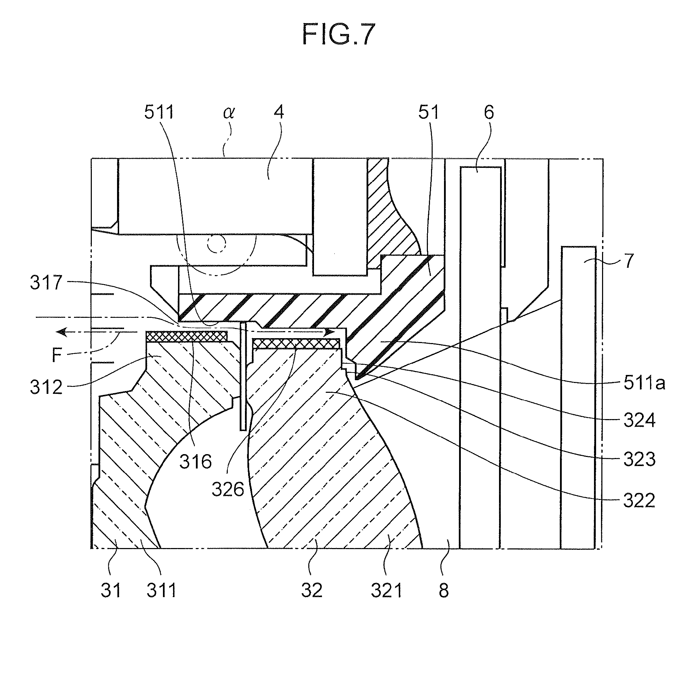

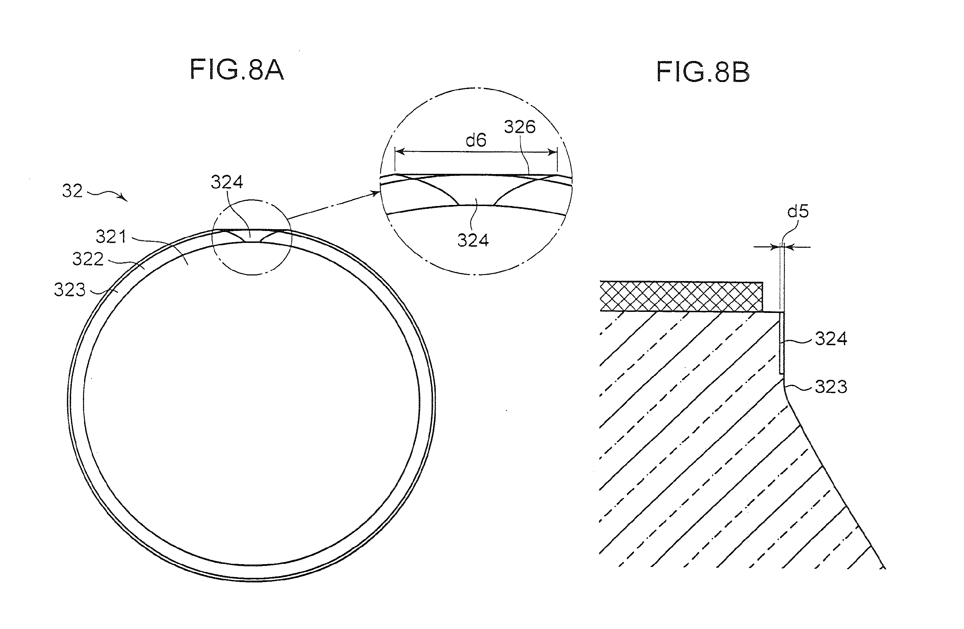

Fig. 7 is an enlarged cross-sectional view depicting the portion indicated by the reference symbol α in Fig. 1. Fig. 8A is a front view of the optical element 32, and Fig. 8B is an enlarged cross-sectional view depicting an area near the edge of the holding unit 322. In the fitting hole 511 on the rear frame 51, a pressing plate 511a is formed on the rear end (image) side to be an inward flange, and the pressing plate 511a holds the contact surface 323 of the holding unit 322 of the optical element 32. Because of the step difference 324 formed in a part of the contact surface 323, a gap with distance d5 is formed between the contact surface 323 and the pressing plate 511a.

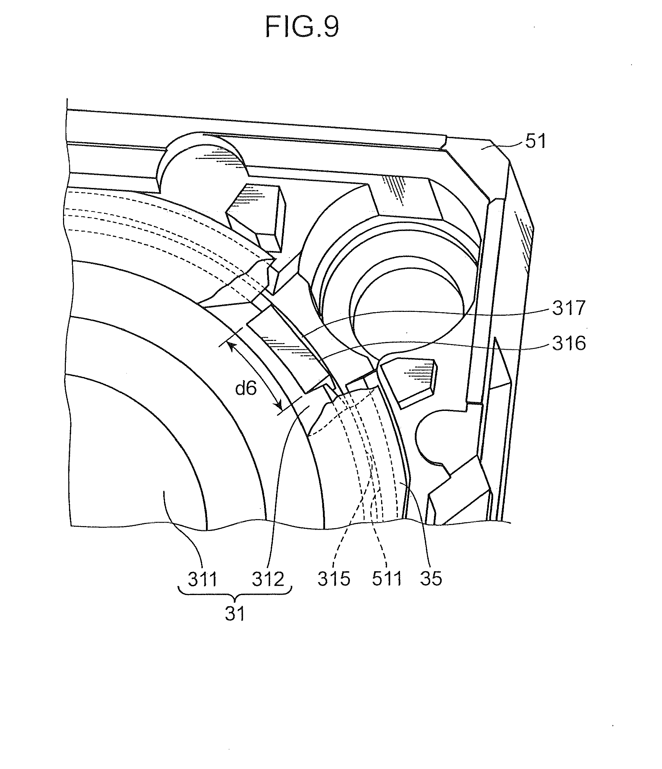

The optical elements 32 and 31 constituted by plastic lenses are molded by injection molding, then D-cutting is performed in the gate position in the de-burring step. Notches 326 and 316 are formed by D cutting, and the range of a notch by the D-cutting is indicated by section d6 in Fig. 8A, and the range of dispersion of the diameter generated by the D-cutting is indicted in halftones in Fig. 7 and Fig. 8B. In Fig. 8, the step difference 324 is illustrated by enhancement. After assembling the optical elements 32 and 31 on the rear frame 51, only section d6 generated by the D-cutting is not coated by adhesive 35, so that the gap 317, due to the notches 326 and 316, is open to the outside as illustrated in Fig. 9. If caulking or welding is used instead of the adhesive 35, this fixing (closing) is not performed only in section d6. Section d6 is about 0.3 to 0.8 mm, for example.

Here in a compact imaging device where the lens cannot be replaced, the area around the moving lens group for auto focus and for zooming is open to the outside (connected with the outside), so that movement of the moving lens group is not interrupted, but the space from the fixed lens group, which does not move, to the picture element, which is disposed on the image (rear) side of the fixed lens group, is normally sealed, to prevent entry of contaminants or to restrict entry of outside air by disposing a filter on the passage to this space, for example, in order to handle expansion/contraction of air in this space due to temperature and air pressure changes.

Whereas in the present embodiment, the structure of the optical elements 32 and 31 in the second group unit 3, which is a conventional component, and the rear frame 51 which is a holding member thereof, are improved, as mentioned above (modification of clearance), therefore the air passage indicated by the reference symbol F in Fig. 7 is created so as to handle expansion and contraction of the air in the space 8 due to the changes of temperature and air pressure. In other words, the air passage is created by connecting the step difference 324 and the notch 326 in the holding unit 322 of the optical element 32 and the notch 316 in the holding unit 312 of the optical element 31. The width, height and diameter of the air passage are set to be smaller than the diameter of the contaminant in advance. In concrete terms, the distance d5 between the contact surface 323 and the pressing plate 511a, generated by the step difference 324, is set not to be greater than 0.02 mm, which is a minimum size of a contaminant which generates a stain on an image.

By this configuration, the step difference 324 and the notches 326 and 316 implement a labyrinth structure, where contaminants cannot enter, and this structure can be implemented simply and at low coast by using conventional components without increasing a number of components or generating a need for separate components.

By using D-cutting to create the notes 326 and 316 in the gate position upon injection molding of optical elements 32 and 31, D-cutting can be formed in the deburring step during molding, preventing an increase in steps.

It is sufficient that at least a part of the step difference 324 and the notches 326 and 316 that form air passages is created to be smaller than the minimum size of a contaminant. The step difference 324 and the notch 326 disposed in a same optical element 32 must be in the same position in the circumferential direction, that is, they must be connected as mentioned above, but the positions of the notches 326 and 316 of the optical elements 32 and 31 in the circumferential direction need not always match. However if there is a match, an air passage can be created with certainty.

The step difference 324 and the notches 326 and 316 may be formed either on the optical elements 32 and 31 side or on the rear frame 51 side, but if formed on the optical elements 32 and 31 side as mentioned above, it is easier to process the core of the rear frame 51, which is a holding member, and if formed on the rear frame 51 side, on the other hand, it is easier to process the core of the optical elements 32 and 31, and the accuracy of each component can be improved.

Configuration of the enclosure 5 will now be described. In the composing elements of the enclosure 5 in Fig. 2 and Fig. 3, the front cover 53 is a sheet metal product which is disposed as an electromagnetic shield and for appearance (design), and after the frames 51 and 52 are assembled, the front cover 53 is covered from the front frame 52 side and is secured to the rear frame 51 by a latch 531a created on the side wall 531, which fits into a latch concave portion 512a formed on a side wall 512 of the rear frame 51.

The frames 51 and 52 are combined and constitute a box, as mentioned above, and encloses at least the first group unit 2, the second group unit 3 and the ultrasonic linear actuator 4. In these frames 51 and 52, a box is constituted by a resin molded product which is divided into a front part and a rear part in the optical axis direction. No via holes are formed on the side walls 512 and 521 of the box, so that an air tight state is created inside the box (the latch concave portion 512a is not a via hole, but is a concave portion of which base is closed).

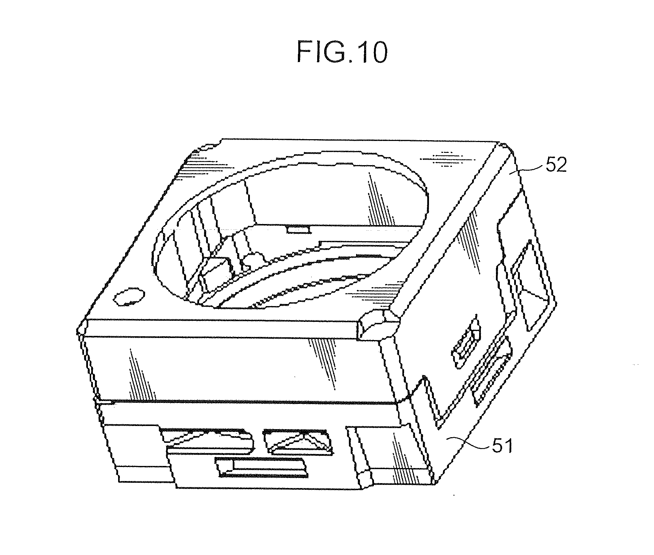

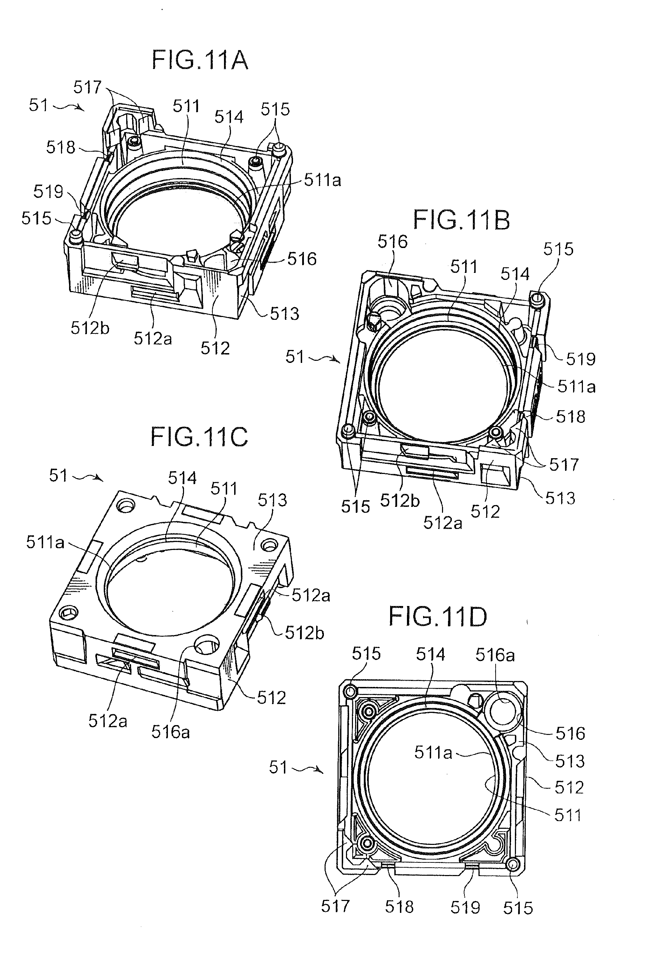

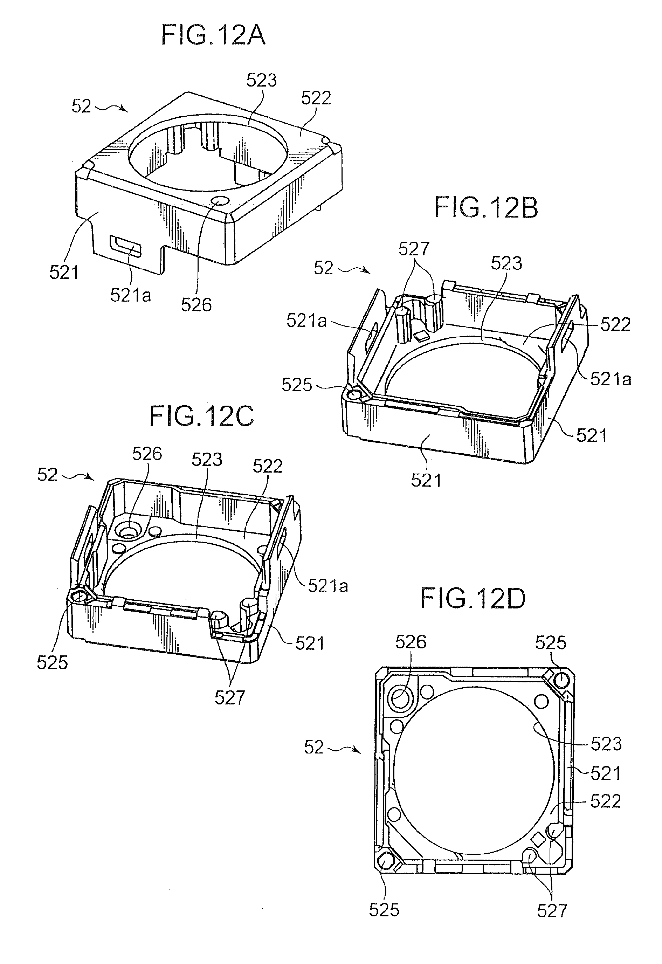

Fig. 10 is a perspective view depicting a state of the frames 51 and 52 being combined, excluding the first group unit 2, the second group unit 3 and the ultrasonic linear actuator 4. Fig. 11 are diagrams of the rear frame 51, where Fig. 11A and Fig. 11B are perspective views from the front face (object) side, Fig. 11C is a perspective view from the rear face (image) side, and Fig. 11D is a front view from the front face (object) side. In the same manner, Fig. 12 are diagrams of the front frame 52, where Fig. 12A is a perspective view from the front face (object) side, Fig. 12B and Fig. 12S are perspective view from the rear face (image) side, and Fig. 12D is a front view from the rear face (image) side.

As Fig. 10 to Fig. 12, Fig. 1 and Fig. 2 illustrate, the rear frame 51 is constituted by a side wall 512 provided in a standing manner from the periphery side of the rectangular base 513, and a holding cylinder 514 that is provided in a standing manner at the inner circumference side. The inner circumference side of the holding cylinder 514 has a fitting hole 511 which holds the second group unit 3. Concerning the side walls 512, the latch concave portion 512a, into which the latch 531a of the front cover 53 fits, is formed on the rear end (image) side of all four surfaces of the side walls, and a latch protrusion 512b, which fits into a latch hole 521a formed on the side wall 521 of the front frame 52, is formed on a pair of the side walls which are parallel with each other. Thereby the front frame 52 and the front cover 53 can be installed on the rear frame 51 simply by insertion without requiring a special securing operation.

In the rear frame 51, a plurality of positioning bosses 515 are disposed with appropriate spacing, and fit into corresponding positioning holes 525 in the front frame 52 side respectively, whereby the misalignment of the frames 51 and 52 in a direction perpendicular to the optical axis can be prevented.

A housing concave portion 516, for housing the ultrasonic linear actuator 4, is formed in one corner of the rear frame 51, and a pair of guide walls 517, for guiding the first group unit 2, is formed in another corner on a diagonal line. Mounting concave portions 518 and 519, corresponding to the external connection terminals 46 and 47, are formed on the side wall distant from the housing concave portion 516.

In the front frame 52, the side walls 521 are provided in a standing manner from the periphery of a rectangular front panel 522, and an opening 523 is formed inside, where the first group unit 2 faces the outside. A fitting hole 526, into which the tip of the rod 42 of the ultrasonic linear actuator 4 fits, is formed in one corner of the front frame 52, and a pair of guide walls 527, for guiding the first group unit 2, is formed in another corner on a diagonal line.

To assemble these frames 51 and 52, the optical element 32, the light shielding plate 34 and the optical element 31 are sequentially fitted into the fitting hole 511 of the rear frame 52, as mentioned above, and are bonded and secured by the adhesive 35, whereby the second group unit 3 is completed. Then the ultrasonic linear actuator 4 is installed in the housing concave portion 516 of the rear frame 51, and the external connection terminals 46 and 47 of the ultrasonic linear actuator 4 are inserted into the mounting concave portions 518 and 519, and a pair of lead wires 44 and 45 are routed around the second group unit 3 and held by the light shielding plate 33. Then the first group unit 2 assembled as above is engaged with the rod 42 of the ultrasonic linear actuator 4, then the tip thereof is inserted into the fitting hole 526, while two frames 51 and 52 are combined, and the frames 51 and 52 are mutually secured by the latch protrusion 512b fitting into the latch hole 521a.

In this state, the ultrasonic linear actuator 4 is secured only by one point at the tip of the rod 42, and the piezoelectric element 41 side can be displaced. This is to allow adjusting the mounting angle (tilt angle) of the ultrasonic linear actuator 4 with respect to the frames 51 and 52, and after the adjustment, the rear face 43a of the weight 43 is bonded with the base 513 of the rear frame 51, whereby the piezoelectric element 41 is secured. For this purpose, an adjustment hole 516a, which is connected to the housing concave portion 516, is formed in the base 513. This adjustment hole 516a is formed to have a smaller diameter than the weight 43. If the weight 43 is omitted, then the rear face of the piezoelectric element 41 is bonded to the base 513.

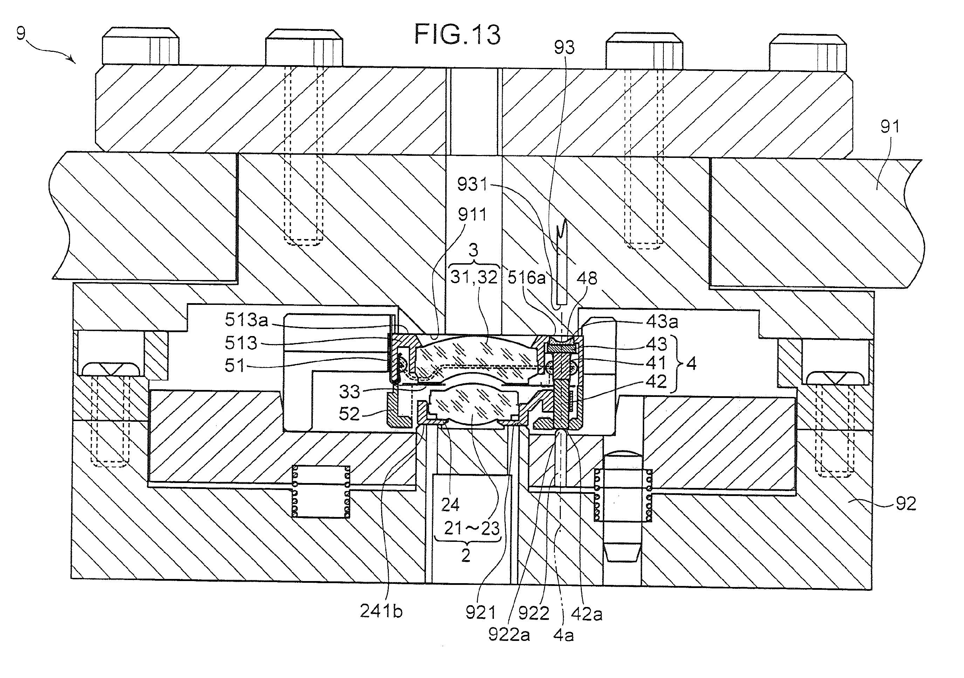

Fig. 13 is a cross-sectional view depicting a structure of the adjustment jig 9 which adjusts the mounting angle (tilt angle) of the ultrasonic linear actuator 4, and performs bonding. This adjustment jig 9 is comprised of a first jig 91, a second jig 92 and an adhesive filling portion 93. The first jig 91 becomes a reference plane to mount the picture element 7 in the rear frame 51 where the second group unit 3 is installed, and has a contact surface 911 which contacts with the rear face 513a of the base 513, which is parallel with the element surface of the picture element 7 and is perpendicular to the optical axis of the second group unit 3, so as to grip the rear frame 51. The second jig 92 becomes a reference plane of the first group unit 2, and has a contact surface 921 that contacts the front face 241b of the pressing plate 241, which is formed to be perpendicular to the optical axis of the first group unit 2, and is parallel with the contact surface 911 of the first jig 91.

This means that by the second jig 92 absorbing the first group unit 2, the angle of the optical axis of the first group unit 2, with respect to the element surface of the picture element 7, can be adjusted to be vertical. The adhesive filling portion 93 has a delivery port 931 near the adjustment hole 516a. After the optical axis of the first group unit 2 is adjusted, as mentioned above, UV curing-adhesive 48 is delivered from the delivery port 931 to the rear end face 43a of the weight 43, and the weight 43 is secured to the base 513 by UV irradiation.

After this assembly, the imaging device is detached from the adjustment jig 9 and the front cover 53 is installed, and this state is shown in Fig. 1. By using this adjustment jig 9, it becomes easy to adjust the inclination of the first group unit 2, which is a moving lens group, and to bond and secure the ultrasonic linear actuator 4 to the rear frame 51.

In the second jig 92, a positioning pin 922 contacts the tip 42a of the rod 42 of the ultrasonic linear actuator 4 and specifies the mounting height of the ultrasonic linear actuator 4, where the shape of this contacting portion 922a is spherical. Therefore the contact portion 922a contacts the center of the tip 42a of the rod 42 at one point, which makes inclination adjustment stable.

After assembling the picture element 7 in the rear frame 51, the rear face 43a of the weight 43 may be moved via the adjustment hole 516a until the image quality becomes best while monitoring the image captured by the picture element, which is a simple operation, whereby the inclination of the ultrasonic linear actuator 4 is adjusted and the position of the picture element 7, with respect to the second group unit 3, is adjusted, and then the ultrasonic linear actuator 4 is bonded and secured to the frame. In this case, factors that deteriorate performance, other than those of the first group unit 2 which is a moving lens group, can be cancelled as well when the plurality of lens groups are configured, and the collective performance as an imaging device can be improved.

As described above, in the imaging device 1 where the first group unit 2 is moved in the optical axis direction using the ultrasonic linear actuator 4 for auto focusing, for example, the frames 51 and 52 for forming a general external shape of the imaging device 1 are created by dividing a box into the front and back in the optical axis direction, and the tip of the rod 42 of the ultrasonic linear actuator 4 is held by the front panel 522 of the front frame 52, and the piezoelectric element 42 is held by the base 513 of the rear frame 51 via the weight 43, then the side walls 512 and 521 of the frames 51 and 52 can be air tight, that is, formed without via holes. Thereby the entry of contaminants can be prevented and the rigidity of the frames 51 and 52, such as resistance to pressing from the front face, can be increased, and a breakdown of the ultrasonic linear actuator 4, due to pressure applied to the frames 51 and 52, can be prevented.

In the front panel 522 of the front frame 52, the fitting hole 526 is formed, where the tip 42a of the rod 42 of the ultrasonic linear actuator 4 is inserted and the ultrasonic linear actuator 4 can support the tip such that the rod 42 can tilt within a prescribed range. In the base 513 of the rear frame 51, an adjustment hole 516a is formed, which faces the rear face 43a of the weight 43 and is smaller than the rear face 43a. After the position of the weight 43, with respect to the adjustment hole 516a, is adjusted so that the optical axis of the first group unit 2, with respect to the element surface of the picture element 7, becomes vertical, the adhesive 48 is filled into the adjustment hole 516a to secure the weight 43. Therefore the mounting angle of the ultrasonic linear actuator 4, with respect to the frames 51 and 52, can be adjusted, and the inclination accuracy of the first group unit 2, which is a moving lens group, can be improved without depending on the accuracy of the components. The fitting hole 526 is closed by the tip 42a of the rod 42, and the adjustment hole 516a is closed by the rear face 43a of the weight 43 and the adhesive 48, so contaminants do not enter, and the thickness required for closing the fitting hole 526 is unnecessary for the molded product (front frame 52), which decreases the height of the product.

The rod 42 of the ultrasonic linear actuator 4 is supported by the front panel 522 only at the tip thereof, therefore the length of the rod 42 can be kept to a length of the portion supported by the front frame 52 plus the moving distance of the first group unit 2. In other words, a number of the axis supporting positions is two in the prior art, but is only one in this embodiment, hence the height of the device can be decreased by the fitting length of the axis. The adjustment hole 516a may be formed to adjust the inclination of the first group unit 2, since the adhesive 48 is filled into the adjustment hole 516a and the space with the weight 43 is closed, and as a result, entry of contaminants can be prevented.

The rod 42 of the ultrasonic linear actuator 4 may be supported by the base 513 of the rear frame 51, and the weight 43 may be supported by the front panel 522 of the front frame 52.

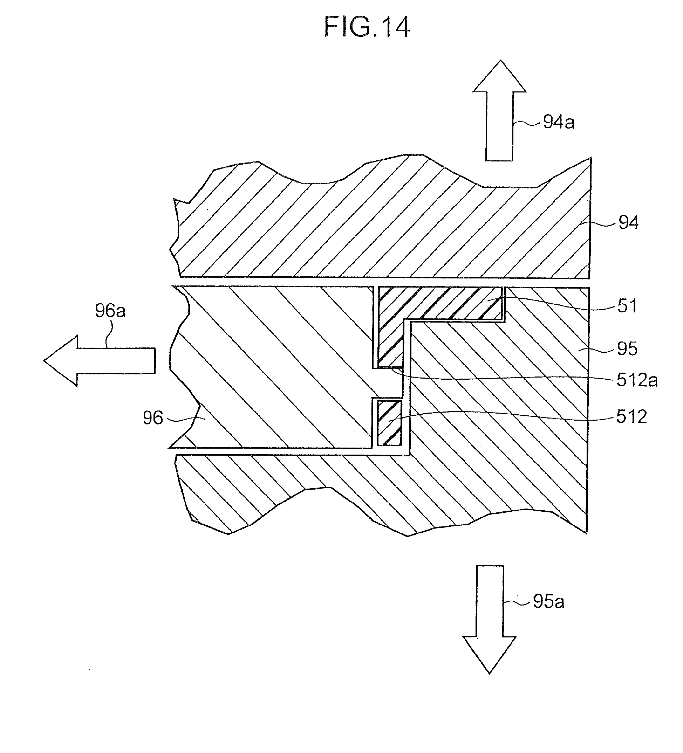

Fig. 14 illustrates a state of the rear frame 51 upon molding (due to convenience, the top and bottom are reversed). In the frames 51 and 52, no members protrude in the longitudinal (optical axis) direction, that is, in a direction perpendicular to the direction of extracting the die. Therefore the die for molding the frame 51 has a fixed core 94, a movable core 95 which can be slightly moved away from the fixed core 94 in the extracting direction, and a movable slide core 96 which can move in a direction perpendicular to the extracting direction, and each core is extracted in the direction of the arrows 94a, 95a and 96a respectively. At this time, the latch concave portion 512a and the latch protrusion 512b are formed in the slide core 96 from the outside, as Fig. 14 illustrates, then the movable core 95 can be extracted in the direction of the arrow 95a, that is, in the longitudinal (optical axis) direction.

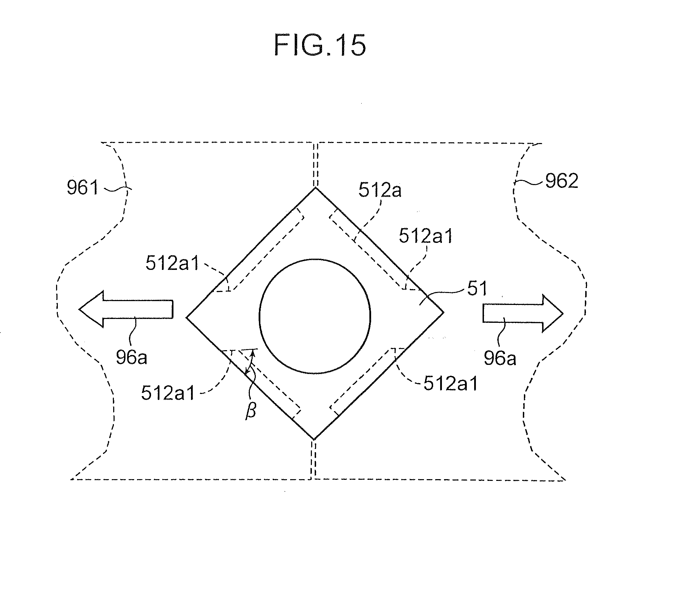

In the case of forming the side faces of the frames 51 and 52 using the left and right two-surface slide cores 961 and 962, as illustrated in Fig. 15, tapered surfaces denoted with the reference symbol 512a1 are formed in the extracting direction 96a, in a portion in which the latch concave portion 512a and the latch protrusion 512b are formed, which are hooked when extracted. The angle β of the tapered surface 512a1, with respect to the side face of the frame 51 or 52, is 45° or less. Then convex/concave portions can be created on the side faces of the frames 51 and 52 using the left and right two-surface slide cores 961 and 962 (e.g. the mounting concave portions 518 and 519 corresponding to the external connection terminals 46 and 47 in the front view of the rear frame 51 illustrated in Fig. 11D).

By this configuration, dies can be easily extracted, and a box, which has no core and has no via holes in the side walls 512 and 521, can be formed, and the entry of contaminants can be prevented, and at the same time, the rigidity of the frames 51 and 52 can be increased.

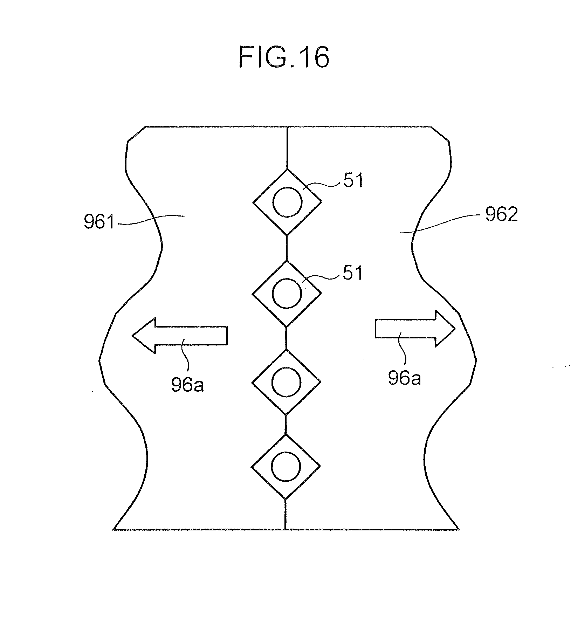

Fig. 16 illustrates an example of forming a plurality of (four in the case of Fig. 16) frames 51 using the slide cores 961 and 962 in Fig. 15. By forming convex/concave portions on the side faces of the frames 51 and 52 using only the left and right two-surface slide cores 961 and 962, molded products (frames 51 and 52) can be molded close to each other, hence the number of components to be produced increases, and cost can be decreased.

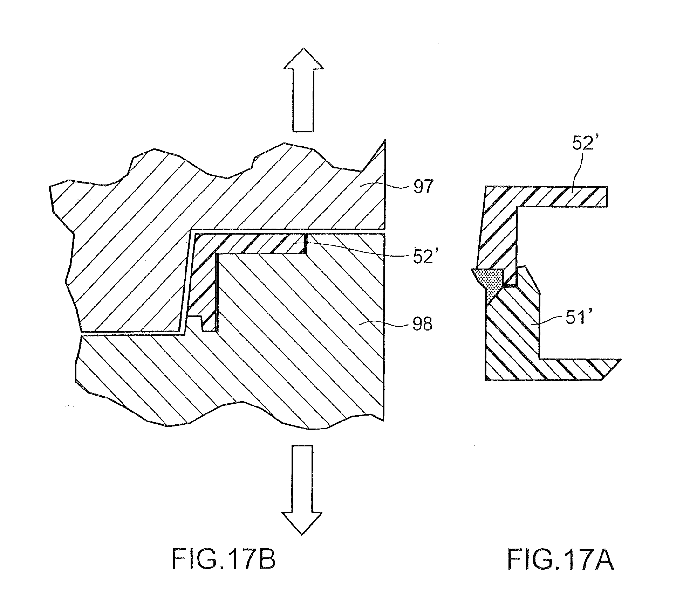

As Fig. 17A shows, if the frame 52' or the front frame 53 (not illustrated) is bonded and secured to the frame 51', this can be molded using only the cores 97 and 98, which are extracted in the longitudinal direction as illustrated in Fig. 17B, without convex/concave portions on the side faces of the frames 51' and 52', which increases the number of components to be produced even more so.

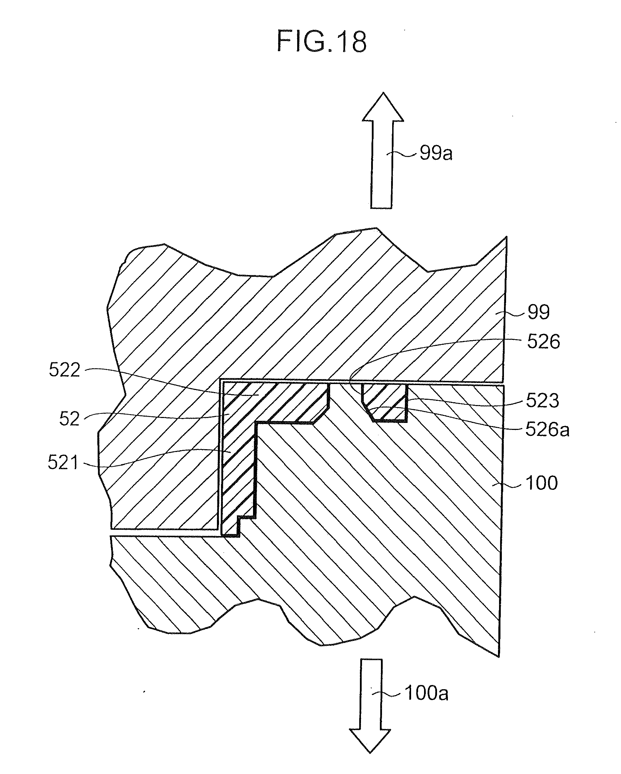

Fig. 18 illustrates the front frame 52 upon molding. In the front frame 52, the fitting hole 526 of the rod 42 is formed in the front panel 522. The fitting hole 526 is formed by the movable core 100, and the taper 526a is formed on the periphery of the fitting hole 526 on the side to be the rear face of the front panel 522. Therefore even if the movable core 100 is clamped with the fixed core 99 and molded, and a burr is formed, the burr is formed on the outer surface side of the front frame 52.

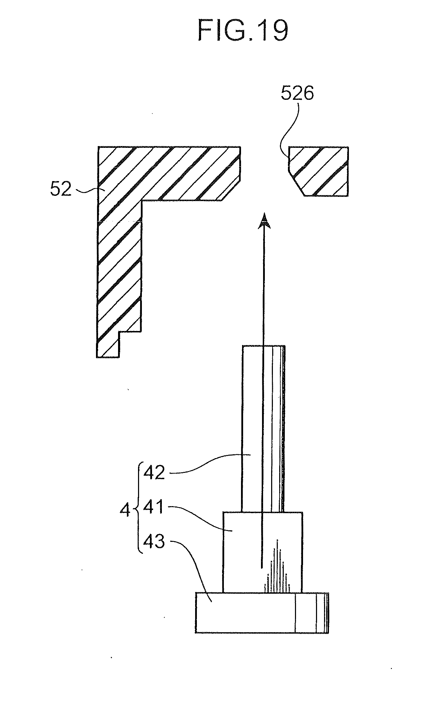

Therefore, as illustrated in Fig. 19, the burr does not influence the fitting of the rod 42 into the fitting hole 526, and the burr does not enter the air tight frames 51 and 52, nor does it become caught in the engaging portion 243 of the moving member 24. Thereby the ultrasonic linear actuator 4 can perform a smooth operation. The rod 42 can be inserted only in one fitting hole 526, and the taper 526a is formed at the entry thereof, hence assembly is easy.

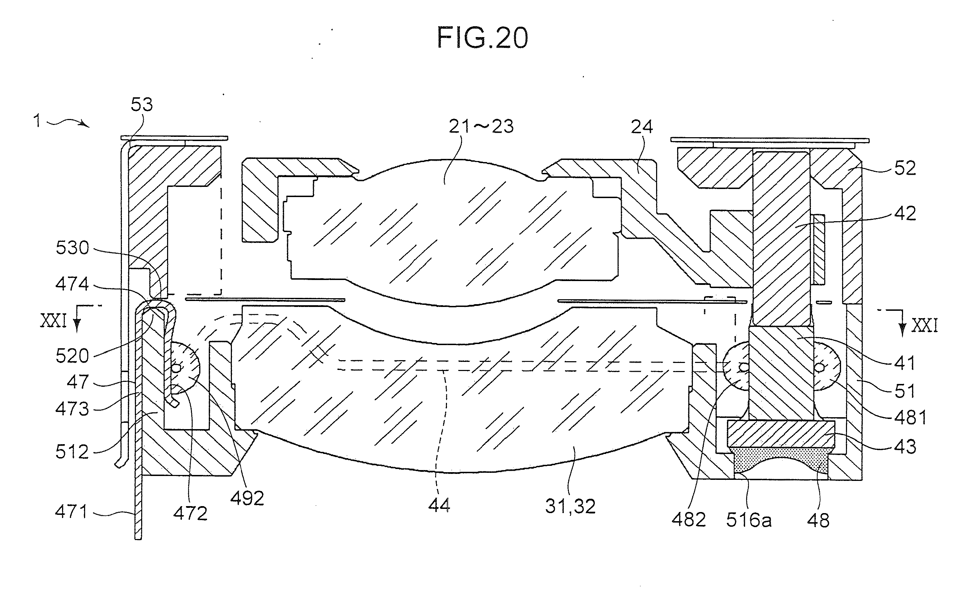

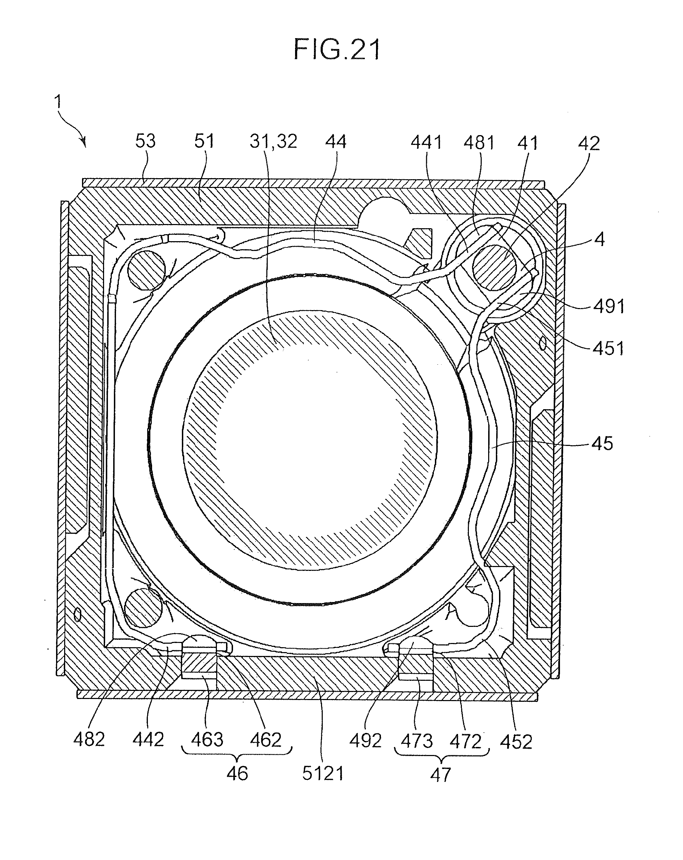

Fig. 20 and Fig. 21 are diagrams depicting the routing of the lead wires 44 and 45, where Fig. 20 is a cross-sectional view of the imaging device 1, and Fig. 21 is a cross-sectional view sectioned at the cutting plane line XXI-XXI in Fig. 20. In Fig. 20 and Fig. 21, it is assumed that the lead wires 44 and 45 are soldered. As mentioned above, according to this embodiment, routing of the lead wires 44 and 45 to the ultrasonic linear actuator 4 and the structure of mounting the external connection terminals 46 and 47 are improved in the configuration of the frames 51 and 52.

To be more specific, ends 441 and 451 of the flexible individual lead wires 44 and 45, which can be routed in the frames 51 and 52, are soldered respectively to the electrodes 411 and 412 of the piezoelectric element 41 in the ultrasonic actuator 4, as indicated by the reference symbols 481 and 491. The other ends 442 and 452 of the lead wires 44 and 45 are soldered to the external connection terminals 46 and 47 respectively, as indicated by the reference symbols 482 and 492.

The external connection terminals 46 and 47 are made of sheet metals and formed into a general J shape, as illustrated in Fig. 3 and Fig. 20, and the other ends 442 and 452 of the lead wires 44 and 45 are soldered to the short pieces 462 and 472 of the J-shapes respectively. The tips 461 and 471 of the long pieces 463 and 473 of the J-shapes are conductively connected to an external board or inserted into connectors.

As mentioned above, the frames 51 and 52 which house at least the first group unit 2 and the second group unit 3 and the ultrasonic linear actuator 4, are formed by a box divided into two. The bent portions 464 and 474 of the external connection terminals 46 and 47 are gripped by the butt surfaces 519 and 529 of the frames 51 and 52 obtained by division into two, and the inner surfaces 465 and 475 of the J-shapes hold the side wall 512 of the frame 51 using elastic force of the sheet metals of the external connection terminals 46 and 47, whereby the external connection terminals 46 and 47 are secured.

If this configuration is used, standard inexpensive components can be used for the configuration to drive the ultrasonic linear actuator 4, including the external connection terminals 46 and 47 and the lead wires 44 and 45, where cost can be decreased compared with the cost of insert molding, for example. The thickness of the side wall 512 of the frame 51 can be minimal, and the lead wires 44 and 45 can be connected to the electrodes 411 and 412 of the ultrasonic linear actuator 4 by simple soldering, therefore the projection area of the soldering portions, indicated by the reference symbols 481 and 491, can be smaller, which contribute to downsizing. Furthermore the metal external connection terminals 46 and 47 are used to implement flexible routing of the lead wires 44 and 45, whereby accuracy improves when the external connection terminals 45 and 46 are inserted between the butt surfaces 520 and 530 of the frames 51 and 52, compared to a flexible board. This allows maintaining air tightness, and the entry of contaminants can be prevented.

As a drive mechanism for the first group unit 2, the above mentioned ultrasonic linear actuator 4 is used. This is not only suitable for downsizing, but a drive mechanism is only to apply rectangular waves on the piezoelectric element 41, as mentioned above, and a number of terminals (electrodes) thereof can only be two, as indicated by the reference symbols 411 and 412. Therefore the number of terminals and the number of lines can be minimized even if the lead wires 44 and 45 are used for the individual external connection terminals 46 and 47, which is particularly ideal for the above mentioned configuration.

The first group unit 2 and the second group unit 3 are disposed at the center of the rectangular frames 51 and 52, and the ultrasonic linear actuator 4 is disposed at the corners of the frames 51 and 52. Therefore by disposing the external connection terminals 46 and 47 on a side wall, which is not adjacent to the ultrasonic linear actuator 4, out of the four side walls 512, the external connection terminals 46 and 47 and the ultrasonic linear actuator 4 can be most distant from each other within the projection surface of the imaging device 1. As a result, if the imaging device 1 having this configuration is used, the influence of the resilience of the lead wires 44 and 45 is minimized upon securing the ultrasonic linear actuator 4, and optical performance can be more easily ensured.

When disposing, at the corner of the frames 51 and 52, the ultrasonic linear actuator 4 that can be driven by the two electrodes 411 and 412 as mentioned above, and that has these electrodes 411 and 412 disposed on the opposite face of the piezoelectric element 41, the two lead wires 44 and 45 can be routed in mutually opposite directions from the ultrasonic linear actuator 4, and reach the corresponding external connection terminals 46 and 47 as illustrated in Fig. 21 and Fig. 3, therefore the lead wires 44 and 45 can be bare wires without insulation coating. As a result, according to the imaging device 1 having this configuration, the step of removing the coating is omitted in the soldering step, assembly can be simplified, and operability can be improved. The resilience of the lead wires 44 and 45 is diminished because of the absence of coating, which makes it easier to ensure optical performance when the ultrasonic actuator 4 is secured.

The lead wires 44 and 45 are routed around the second group unit 3, which is a fixed lens group, hence it is unnecessary to take a designated space for routing of the lead wires 44 and 45, and as a result, the space efficiency can be improved, and the imaging device 1 having this configuration can be downsized. The lead wires 44 and 45 are routed around the second group unit 3, which is a fixed lens group, therefore activation problems of the first group unit 2, which is a moving lens group, does not occur, and the possibility of malfunctions, such as disconnection in the lead wires 44 and 45 themselves also decreases, and as a result, the imaging device 1 having this configuration can improve reliability.

If the lead wires 44 and 45 are isolated from the space where the first group unit 3, which is a moving lens group, is disposed, by the light shielding plate 33 for shielding entry of harmful rays to the lenses, then contact of the first group unit 2 and the lead wires 44 and 45 can be prevented, and reliability can be improved.

In the external connection terminals 46 and 47, such treatment as solder plating, gold plating, silver plating, nickel plating or galvanization is performed on the short pieces 462 and 472 of the J-shapes, and on the tip portions 461 and 471 of the long pieces 463 and 473 of the J-shapes to improve the wettability of soldering, when the base material is a material of which wettability of soldering is relatively poor, such as SUS. This configuration allows implementing good conductivity in the soldered portion, and prevents interference with other components due to the undesirable entry of soldering in an area which is not a soldering target portion, thus reliability can be improved.

It is preferable that the external connection terminals 46 and 47 are made from a magnetic material. This makes it easier to set in a jig for soldering (absorption), and operability can be improved. According to the present embodiment, austenitic stainless steel (SUS 304) is used for the external connection terminals 46 and 47. Austenitic stainless steel is normally a non-magnetic material, but according to this embodiment, a weak magnetic force generated by bending processing is utilized. For the external connection terminals 46 and 47, ferritic stainless steel, which is a magnetic material, may be used instead. If a magnetic material is used as the base material, the soldering portions may be plated, as mentioned above.

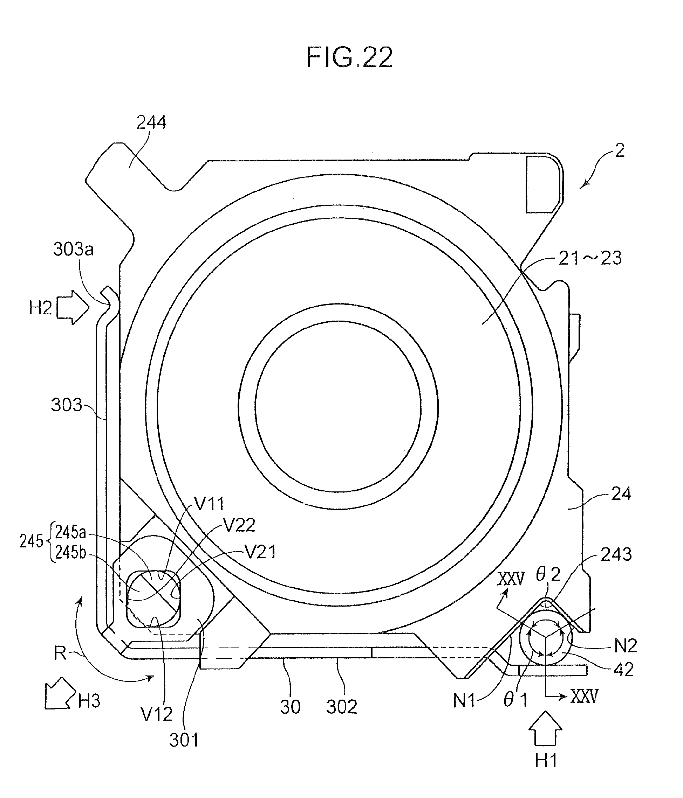

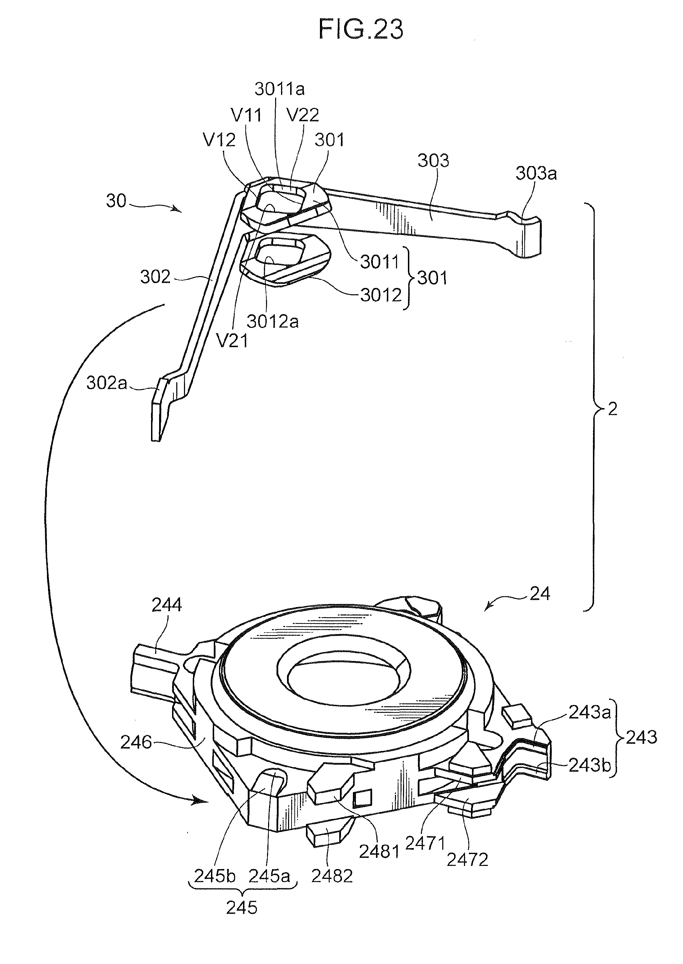

Now the holding structure of the first group unit 2 will be described. Fig. 22 is a front view of the first group unit 2, and Fig. 23 is an exploded perspective view thereof. In Fig. 22, the rod 42 of the ultrasonic linear actuator 4 is also illustrated. The first group unit 2 is configured such that the pressing member 30 is assembled in the holding member 24 for holding the optical elements 21 to 23, which are joined as mentioned above, and becomes a moving body which moves in the axis direction of the rod 42. The pressing member 30 and the holding member 24, which is a moving body main portion facing the pressing member 30, grip the rod 42 therebetween, so as to engage the holding member 24 with the rod 42 with a prescribed frictional force.

The holding member 24 is formed into an approximate rectangle, and one of the corners of the rectangle is the engaging portion 243 with the rod 42 of the ultrasonic linear actuator 4 disposed near this corner, and a guide piece 244 is formed near the corner on a diagonal line. The guide piece 244 is inserted between a pair of guide walls 517 and 527 (see Fig. 11 and Fig. 12) in the frames 51 and 52, whereby rotation of the holding member 24 around the rod 42 is blocked, and the rod 42 can move in the axis direction. On one of the corners adjacent to the engaging unit 243, a pair of bosses 245 serving as the engaging portion of the pressing member 30 are provided in a standing manner in the longitudinal direction.

Whereas the pressing member 30 is formed in a V-shape, that is, a plate spring having an elasticity that is bent at a substantially middle portion by sheet metal processing. This substantially middle portion, that is, the point of bending in the V-shape, is the engaging portion 301, which engages with the boss 245, can be freely oscillated as the reference symbol R indicates. In the pressing member 30, two sides of the V-shape are used as the plate spring member, and the tip of one side 302 becomes a pressing portion 302a which presses the rod 42 in the arrow H1 direction, and the tip of the other side 303 becomes a receive portion 303a which receives reactive force in the arrow H2 direction generated by the pressing portion 302a pressing the rod 42 after contacting the contact portion 246 of the holding member 24.

By this configuration, even if the processing member 30 is supported at a substantially middle portion, elasticity can be exhibited approximately throughout the entire length of the pressing member 30, beyond the support point of oscillation (engaging portion 301), and the length from the force point (receive portion 303a) of the pressing member 30 to the action point (pressing portion 302a) can be increased.

Generally the flexure amount of the plate spring member is in proportion to the cube of the distance from the fixed point to the action point, and is in proportion to the amount of force. Therefore in the case of a conventional plate spring of which one end is fixed to the holding member and the other end is pressing the rod, the flexure amount y is given by $Y = L^3 \times F/ (3EI)$ (I: geometrical moment of inertia; E: Young's modulus) where L denotes a distance from the fixed point to the pressing point, and F denotes force to be generated.

In the case of this embodiment however, the flexure amount y1, to generate the same force F, is given by

$$y1 = (L^3 + L1^2 \times L) \times F/ (3EI)$$

where L denotes a distance from the fixed point (engaging portion 301) to the action point (pressing portion 302a), and L1 denotes a distance from the fixed point (engaging portion 301) to the reactive force support portion (receive portion 303a).

A comparison of y and y1 shows that y1 is greater, since $L1^2 \times L$ is added, and $L1^2$ is a positive value. Therefore if the same flexure amount changed in the plate spring member, then the change of the frictional force (gripping force) F of the moving body with respect to the rod 42, that is, the change of the amount of force, can be decreased in this embodiment, because the distance is longer. Thus the spring sensitivity of the pressing member 30 can be decreased, and fluctuation of the frictional force (gripping force) of the ultrasonic linear actuator 4 can be suppressed, and as a result, the drive performance can be stabilized.

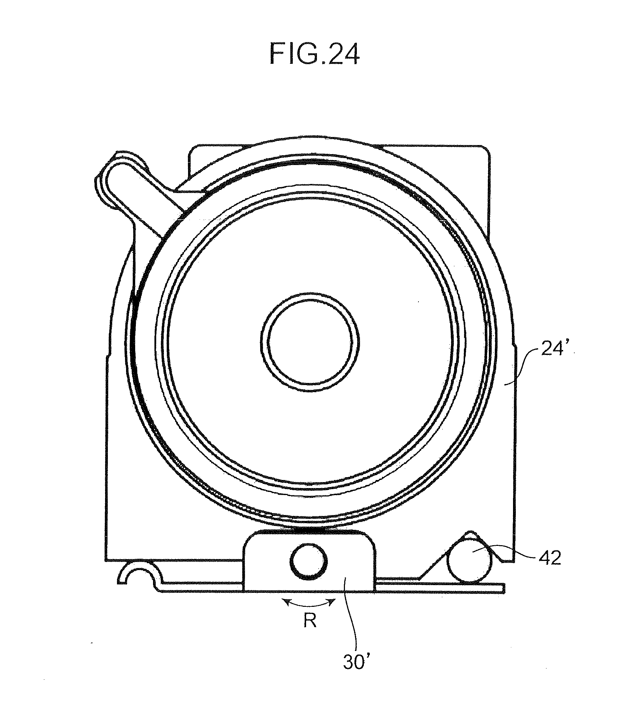

If the substantially middle portion of the pressing element constituted by the plate spring member is oscillatably supported, the linear plate spring member, such as the pressing member 30' shown in Fig. 24, may be used corresponding to the component layout around the holding member 24'. But if a V-shaped plate spring member that reaches the two sides of the rectangular holding member 24, such as the pressing member 30, is used, the plate spring portion that has elasticity can be long, which further decreases the above mentioned spring sensitivity.

The engaging portion 301 with the holding member 24 in the pressing member 30 includes a pair of engaging pieces 3011 and 3012, which grip the plate type holding member 24 therebetween in the thickness direction (longitudinal direction), and engaging holes 3011a and 3012a formed in the engaging pieces 3011 and 3012 are engaged with a pair of bosses 245, which are provided in a standing manner at the front and back of the holding member 24 respectively. Thereby the pressing member 30 is oscillatably supported as indicated by the reference symbol R, as mentioned above. The boss 245 has a columnar shape with a curved outer surface, like a cylinder. The engaging holes 3011a and 3012a are formed to be a quadrangle into which a boss can gently fit, and two pairs of sides facing each other in the quadrangle V11, V12; V21, V22 are disposed in parallel with one side 302 on the pressing portion 302a side in the pressing member 30 and the other side 303 on the receive portion 303a side respectively.

Therefore the pressing member 30 exhibits the elastic force, and if the force is applied in a direction of closing the V-shape, that is, in a direction for the boss 245 to move away from the engaging holes 3011a and 3012a as indicated by the arrow H3, the cylindrical boss 245 contacts the adjacent two sides V11 and V21 of the quadrangle engaging holes 3011a and 3012a. Thereby even if the tolerance of the boss 245 and the engaging holes 3011a and 3012a is not very strict, (even if these components are somewhat misaligned or the shapes thereof are not perfect, for example), the pressing member 30 can exhibit a stable elastic force.

Since the pressing member 30 is engaged with the holding member 24 for installation by engaging the convex/concave portions thereof with each other, a separate component for installation is not required, which simplifies assembly, and at the same time, a stable oscillation operation can be implemented by gripping the holding member 24 between the pair of the engaging pieces 3011 and 3012. For the boss 245, the inner side 245a of the holding member 24 is cylindrical, and the outer side 245b thereof has an inclining guide face, hence assembly can be easily performed while preventing the engaging pieces 3011 and 3012 from disengaging from the boss 245. The boss 245 may be formed in the engaging pieces 3011 and 3012, and the engaging holes 3011a and 3012a may be formed in the holding member 24.

A pair of regulating members 2471 and 2472 are disposed in the holding member 24 near the ultrasonic linear actuator 4, so that the pressing portion 302a of the pressing member 30, engaged with the rod 42 of the ultrasonic linear actuator 4, will not move in the axis direction of the rod 42. In the same manner, a pair of regulating members 2481 and 2482 are disposed on the engaging portion 301 side.

One side 302, from the engaging portion 301 to the pressing portion 302a in the pressing member 30 constituted by the plate spring member, could be distorted or deflected when the holding member 24 moves, since the pressing portion 302a is engaged with the rod 42 of the ultrasonic linear actuator 4. However if the pair of regulating members 2471, 2472; 2481, 2482, for holding the side 302 from both sides in the moving direction, is disposed according to the configuration described above, distortion and deflection can be controlled, and fluctuation of the frictional force (gripping force) F of the ultrasonic linear actuator 4 can be suppressed.

In the above example, as a member for regulating the movement of the side 302, a pair of regulating members 2471, 2472; 2481, 2482 is used so as to hold the side from both sides in the moving direction, but an engaging hole may be formed in the side 302 at one location in advance, and a pin, which can be gently inserted into the engaging hole, may be used.

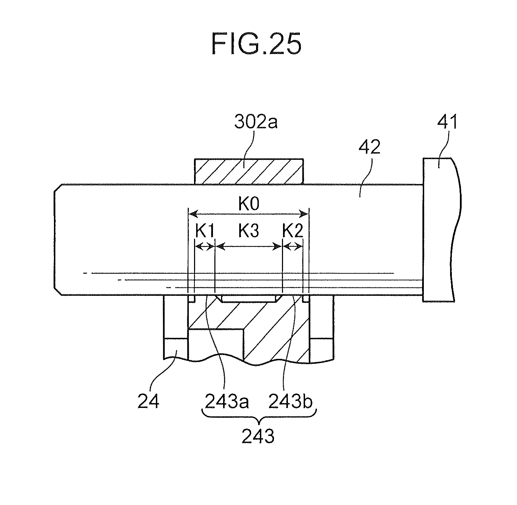

Now a structure of the engaging portion of the first group unit 2 with the rod 42 will be described. Fig. 25 is a cross-sectional view of the engaging portion sectioned at the cutting plane line XXV-XXV in Fig. 22. As Fig. 22 and Fig. 23 illustrate, the rod 42 is formed to be cylindrical, and the engaging unit 243, which is a contact unit of the holding member 24 with respect to the rod 42, and two sets of V-shaped contact pieces 243a and 243b, are disposed at a distance in the axis direction of the rod 42.

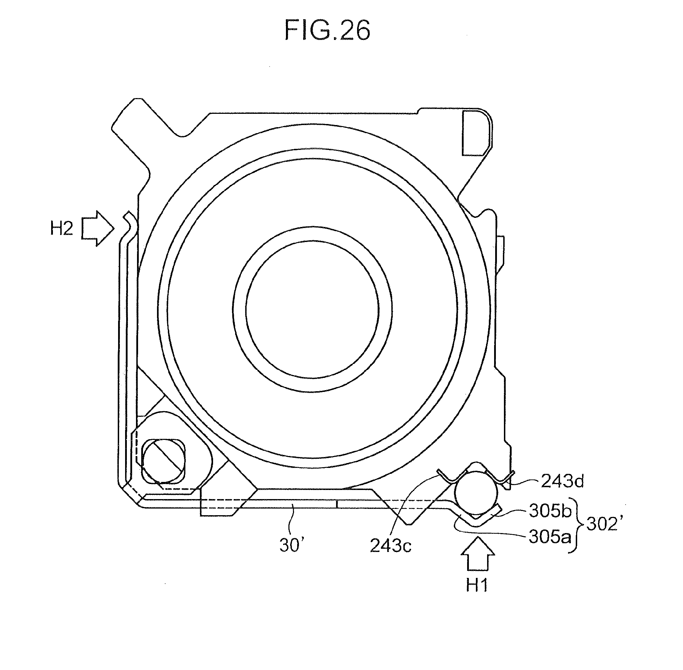

The contact pieces 243a and 243b need not be continuous in the V-shape so as to surrounding the outer surface of the rod 42, instead the contact pieces 243a and 243b may be constituted by four chips which actually contact the rod 42, as illustrated with the contact pieces 243c and 243d in Fig. 26. The contact pieces are disposed at a distance less than 180° in the circumferential direction of the rod 42, since the pressing member is facing the opposite side. The rod 42 is not a prism, but a cylinder, and the cross-section sectioned at a direction perpendicular to the axis may be a circle or an ellipse.

The V-shaped contact pieces 243a and 243b and the individual contact pieces 243c and 243d slide on the rod 42, so it is preferable that the material thereof is a liquid crystal polymer (LCP) or a polyphenylene sulfide resin (PPS), to which an additive to increase hardness is added. The additive is preferably glass fiber, carbon fiber, titanium oxide or potassium titanate. The polyphenylene sulfide resin and the liquid crystal polymer have good fluidity, and are ideal for precision molding, and if an additive is added to increase hardness, drive performance (velocity) can be improved.

According to this configuration, the rod 42 is supported at three points, including the pressing member 30, as the plane of projection from the front face shows in Fig. 22. Hence even if the relative positions of the holding member 24 and the pressing member 30 are slightly misaligned, the pressing member 30 applies an approximately equal pressing force to each contact piece 243a and 243b for the rod 42, at the opposite side of the contact pieces 243a and 243b. Compared with the case of a U-shaped groove or a V-shaped groove where the engaging portion 243 is connected in the axis direction of the rod 42, where each surface or pair of lines contacts the rod 42, the dispersion tolerance of molding and processing of the engaging portion 243 is higher if contact is at four points, therefore fluctuation of frictional force (gripping force) of the holding element 24 can be suppressed, and drive performance can be stabilized.

It is preferable that the length of the portion of each contact piece 243a and 243b contacts the rod 42 in the axis direction, that is, the contact length K1 or K2, is 1/3 of the width K0 of the engaging portion 243 or less, and the distance K3 of the two sets of contact pieces 243a and 243b is 1/3 or more. By this configuration, each contact piece 243a and 243b contacts the rod 42 at a point, and the above mentioned effect can be enhanced.

As illustrated in Fig. 22, the pair of contact pieces 243a and 243b may be disposed in such a way that the distance θ1 between the respective contact areas is 120° in the circumferential direction, that is the angle θ2, formed by the tangential lines N1 and N2 at a pair of contact areas, is 60°. In this case, the three points on the cross-section perpendicular to the axis have an approximately 120° interval, since the pressing portion 302a of the pressing member 30 is constituted by a flat plate spring, as mentioned above, and the pressing force from the pressing member 30 can be applied equally to the contact areas of the pair of contact pieces 243a and 243b.

As illustrated in Fig. 26, the pressing portion 302a' of the pressing member 30' may also be formed by a plate of which cross-section perpendicular to the axis is V-shaped. In this case, the pressing portion 302a' contacts with the rod 42 at two lines. Therefore the pressing force can be dispersed.

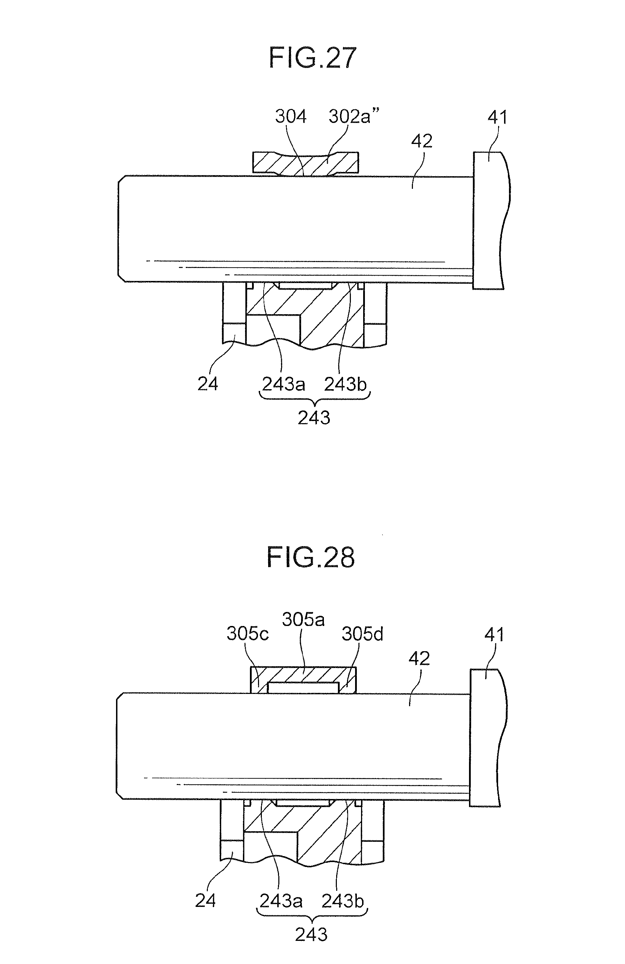

As illustrated in the pressing portion 302a" in Fig. 27, the center portion thereof in the direction of the axis of the rod 42 may be raised to form the contact portion 304, which actually contacts the rod 42. If the pressing portion 302a" side is also a point contact, the pressing force can be applied equally to the two sets of contact pieces 243a and 243b which are disposed with an interval therebetween in the axis direction of the rod 42.

The contact portion 304 may be a ridge instead of a point (protrusion), and the contact length of the ridge is 1/2 or less of the width of the pressing portion 302a", then pressing force can be applied equally to the two sets of contact pieces 243a and 243b. Furthermore, the pressing force per unit area can be decreased, and wear resistance can be improved.

In the V-shaped pressing portion 302a' illustrated in Fig. 26, two sets of contact pieces 305c and 305d may be disposed with an interval therebetween in the axis direction of the rod 42 in each of the pair of contact pieces 305a and 305b respectively, as illustrated in Fig. 28. In this case, the outer surface of the rod 42 is supported by four points on the holding member 24 side, and by four points on the pressing portion 302a' side facing the holding member 24. Therefore the pressing force per unit area can be decreased, and wear resistance can be improved.

The present description discloses various aspects of technologies as mentioned above, and major technologies thereof will be summarized below.

A drive mechanism according to an aspect comprises: an ultrasonic linear actuator in which a rod, connected to a piezoelectric element, moves reciprocally in an axis direction in response to expansion/contraction of the piezoelectric element; and a moving body that engages with the rod with a prescribed frictional force so as to move in the axis direction of the rod, wherein the moving body includes a moving body main portion, and a pressing member which faces the moving body main portion and grips the rod between the pressing member and the moving body main portion, and the pressing member is an oscillatable plate spring member including: one end which is a pressing portion to press the rod; a substantially middle portion which engages with the moving body main portion; and the other end serving as a receive portion which receives a reactive force generated by the pressing portion pressing the rod after contacting the moving body main portion.

This configuration provides a drive mechanism which is used for moving a lens group in the optical axis direction in order to perform auto focus and zoom in an imaging device, for example, and which uses an ultrasonic linear actuator where the expansion/contraction of a piezoelectric element is transferred to a rod, and a moving body constituted by the lens group is engaged with the rod with a prescribed frictional force, so as to move the moving body by the velocity difference of the piezoelectric element upon expansion and contraction. In this drive mechanism, engagement of the moving body with the rod, particularly the structure of the pressing member for holding (gripping) the rod between this pressing member and the moving body main portion constituted by the lens group, is devised.

To be more specific, the pressing member is constituted by an elastic plate spring member, and the substantially middle portion thereof is engaged with the moving body main portion, so that it oscillates like a seesaw. One end of the pressing member is a pressing portion that presses the rod, and the other end is a receive portion that receives reactive force generated by the pressing portion pressing the rod after contacting the moving body main portion.

Therefore even if the pressing member is supported at the substantially middle portion, elasticity can be exhibited approximately through the entire length of the pressing member, beyond the support point of oscillation, and the length from the force point (receive portion) of the pressing member to the action point (pressing portion) can be increased. Generally the flexure amount of the plate spring member is in proportion to the cube of the distance from the fixed point to the action point, and is in proportion to the amount of force, therefore if the flexure amount changes, the change of the amount of force, that is the change of the frictional force (gripping force) of the moving body with respect to the rod, can be decreased, because the distance is longer. Thus the spring sensitivity of the pressing member can be decreased, and the fluctuation in the frictional force (gripping force) of the ultrasonic linear actuator can be suppressed, and drive performance can be stabilized.

According to another aspect, it is preferable that, in the drive mechanism, the moving body main portion is formed into an approximate rectangle, the ultrasonic linear actuator is disposed near one corner out of a plurality of corners of the rectangle, an engaging portion of the pressing member with the moving body main portion is disposed near a corner adjacent to the corner where the ultrasonic linear actuator is disposed, and the receive portion in the pressing member is disposed near a corner on a diagonal line from the corner where the ultrasonic linear actuator is disposed.

According to this configuration, the moving body main portion is formed into an approximate rectangle, and if the ultrasonic linear actuator is disposed in one of the corners of the rectangle, an engaging portion of the pressing member with the moving body main portion is located near a corner adjacent to the corner where the ultrasonic linear actuator is disposed, and the receive portion of the pressing member is located near a corner on a diagonal line from the corner where the ultrasonic linear actuator is disposed. In other words, the pressing member is formed in a V-shape, and the point of bending in the V-shape engages with the moving body main portion so as to freely oscillate like a seesaw, as mentioned above, and the two sides of the V-shape are used as the plate spring member.

Therefore according to this configuration, the length of the plate spring portion which exhibits elasticity can be increased, and the spring sensitivity can be further decreased.

According to another aspect, it is preferable that, in the drive mechanism, the engaging portion of the pressing member with the moving body main portion is configured in such a way that the moving body main portion is formed to be a plate form, the pressing member includes a pair of engaging pieces which grip the moving body main portion therebetween in a thickness direction, and a boss, which is provided in a standing manner in one of the moving body main portion and the engaging pieces, fits into an engaging hole formed in the other of the moving body main portion and the engaging pieces, and the boss is formed to be a columnar form having a curved lateral surface, and the engaging hole is formed to be a quadrangle into which the boss fits, and two pairs of opposite sides of the quadrangle are disposed to be parallel with a side on one end (pressing portion) of the pressing member and a side on the other end (receive portion) of the pressing member respectively.

According to this configuration, in order to configure the engaging portion of the pressing member with the moving body main portion by gripping the plate type moving body main portion by a pair of engaging pieces in the thickness direction of the moving body main portion, and by fitting a boss that is provided in a standing manner in one of the moving body main portion and the engaging pieces into the engaging hole formed in the other of the moving body main portion and the engaging pieces, the boss is formed in a cylindrical shape, and the engaging hole is formed to be a quadrangle which is larger than the boss, and the direction of the quadrangle is matched with that of the V-shaped pressing member. In other words, a pair of two opposing sides of the quadrangle is disposed in parallel with the two sides of the pressing member respectively.

Therefore according to this configuration, if the pressing member exhibits the elastic force and the force is applied in a direction of closing the V-shape, that is, in a direction for the boss to move away from the engaging hole, then the cylindrical boss contacts the adjacent two sides of the quadrangular engaging holes. Thereby even if the tolerance of the boss and the engaging hole is not very strict (even if these components are somewhat misaligned or the shape thereof is not perfect), the pressing member can exhibit a stable elastic force. Since the pressing member is installed in the moving body main portion by engaging the convex/concave portions thereof with each other, a separate component for installation is not required, which simplifies assembly, and at the same time, a stable oscillation operation can be implemented by gripping the moving body main portion between the pair of engaging pieces.

According to another aspect, it is preferable that, in the drive mechanism, the moving body main portion further includes, near the ultrasonic linear actuator, regulating means for regulating a pressing portion of the pressing member, engaged with the rod of the ultrasonic linear actuator, moving in the axis direction of the rod.

According to this configuration, in the pressing member constituted by the plate spring member, the side, from the engaging portion with the moving body member to the pressing portion, could be distorted or deflected when the moving body moves, since the pressing portion is engaged with the rod of the ultrasonic linear actuator. Therefore regulating means (guide) for regulating the movement of the pressing portion of the pressing member in the axis direction of the rod is disposed near the ultrasonic linear actuator. The regulating means may have pieces which hold the pressing member from both sides in the moving direction, or may be a pin which can be gently inserted into a hole created at one location of the pressing member.

According to this configuration, distortion and deflection of the pressing member can be controlled upon the movement of the moving body, and fluctuation in the frictional force (gripping force) of the ultrasonic linear actuator can be suppressed.

According to another aspect, it is preferable that, in the drive mechanism, LCP or PPS added with an additive to increase hardness is used for a material of the engaging portion of the moving body main portion with the rod of the ultrasonic linear actuator.

According to this configuration, the moving body main portion and the rod of the ultrasonic linear actuator slide on each other, therefore it is preferable that the material of the moving body main portion is LCP or PPS, to which an additive to increase hardness is added.

A drive mechanism according to another aspect comprises: an ultrasonic linear actuator in which a rod, connected to a piezoelectric element, moves reciprocally in an axis direction in response to expansion/contraction of the piezoelectric element; and a moving body that engages with the rod with a prescribed frictional force so as to move in the axis direction of the rod, wherein the moving body includes a moving body main portion, and a pressing member which faces the moving body main portion and grips the rod between the pressing member and the moving body main portion, the rod is formed to be a cylindrical form, and a contact portion of the moving body main portion with respect to the rod includes two sets of a pair of contact pieces which are disposed with an interval in a circumferential direction of the rod, these sets being disposed with an interval in the axis direction of the rod.

This configuration provides a drive mechanism which is used for moving a lens group in the optical axis direction in order to perform auto focus and zoom in an imaging drive, for example, and which uses an ultrasonic linear actuator where the expansion/contraction of a piezoelectric element is transferred to a rod, and a moving body constituted by the lens group is engaged with the rod with a prescribed frictional force, so as to move the moving body utilizing a velocity difference of the piezoelectric element upon expansion and contraction. In this drive mechanism, engagement of the moving body with the rod, particularly the structure of the contact portion of the moving body main portion for holding (gripping) the rod between the moving body main portion constituted by the lens group and the pressing member, such as a plate spring, is devised.

To be more specific, the rod is formed to be cylindrical, and the contact portion is constituted by two sets of a pair of contact pieces which are disposed with an interval of less than 180° in the circumferential direction of the rod, and these sets are disposed with an interval in the axis direction of the rod. In other words, the moving body main portion contacts the rod at four points, and in the plane of projection from the front face, the rod is supported at three points, including the pressing member. Hence even if the relative positions of the moving body main portion and the pressing member are slightly misaligned, the pressing member applies approximately equal pressing force to each contact piece for the rod, for the opposite side of the pair of contact pieces. The rod is not a prism but a cylinder, and the cross-section perpendicular to the axis may be a circle or an ellipse.

Therefore according to this configuration, compared with the case of a U-shaped groove or a V-shaped groove, where the contact portion is connected in the axis direction of the rod, and each surface or a pair of lines contacts the rod, the dispersion tolerance of molding and processing of the contact portion is higher if contact is at four points, therefore fluctuation in the frictional force (gripping force) of the moving body can be suppressed, and drive performance can be stabilized.

According to another aspect, it is preferable that, in the drive mechanism, a contact length of each contact piece with the rod in the axis direction is 1/3 or less of a width of the contact portion.

According to this configuration, in the contact portion of the moving body main portion with the rod, the length of each contact piece contacting the rod in the axis direction, that is, the contact length, is 1/3 or less of the width of the contact portion, and the distance between the two sets of contact portions is 1/3 or more.

Therefore according to this configuration, each contact piece contacts the rod at a point, and the above mentioned effect can be enhanced.

According to another aspect, it is preferable that, in the drive mechanism, the contact positions of the pair of contact pieces with the rod are 120° apart from each other in the circumferential direction of the rod.

According to this configuration, the pair of contact pieces are disposed in such a way that the distance between the respective contact pieces is 120° in the circumferential direction, that is, the angle formed by the tangential lines of the contacting areas of the pair of contact pieces is 60°.

Therefore according to this configuration, if the pressing member is constituted by a flat plate spring, for example, the three points on the cross-section perpendicular to the axis have an approximately 120° interval, therefore the pressing force from the pressing member can be equally applied to the pair of contact pieces.

According to another aspect, it is preferable that, in the drive mechanism, the pressing member is a flat plate spring.

According to this configuration, the interval of the three points, namely the pressing member and the pair of contact pieces, is approximately 120°, and the pressing force from the pressing member can be equally applied to the pair of contact pieces.

According to another aspect, it is preferable

31        **EP 2 498 392 A1**        32

that, in the drive mechanism, the pressing member includes a plate body of which cross-section perpendicular to the axis is V-shaped.

According to this configuration, the pressing member contacts the rod at two lines.

Therefore according to this configuration, the pressing force can be dispersed.

According to another aspect, it is preferable that, in the drive mechanism, a contact length of the pressing member with the rod is 1/2 or less of a width of the contact portion.

According to this configuration, the contact length of the pressing member with the rod is 1/2 or less of the width of the contact portion.

Therefore according to this configuration, the pressing force can be equally applied to the two sets of contact pieces, which are dispersed with an interval in the axis direction of the rod.

According to another aspect, it is preferable that, in the drive mechanism, a contact portion of the pressing member contacts the rod at a point in a substantially middle position of the contact portion of the moving body main portion.

According to this configuration, the contact portion of the pressing member contacts the rod at a point in the substantially middle position of the contact portion.

Therefore according to this configuration, the pressing force can be substantially equally applied to the two sets of contact pieces which are disposed with an interval in the axis direction of the rod.

According to another aspect, it is preferable that, in the drive mechanism, the contact portion of the pressing member with the rod includes two sets of contact pieces which are disposed with an interval in the axis direction of the rod.

According to this configuration, the dispersion tolerance of molding and processing of the contact portion of the pressing member side is also high, therefore fluctuation in the frictional force (gripping force) of the moving body can be suppressed, and drive performance can be stabilized.

An imaging device according to another aspect comprises: one of the above mentioned drive mechanisms; and a fixed lens group, wherein the moving body is a moving lens group.

According to this configuration, the imaging device that can ensure stability in the movement of the moving lens group can be implemented.

This application is based on Japanese Patent Application No. 2009-252794 and Japanese Patent Application No. 2009-252796, with the filing date of November 4, 2009, and the present application includes the content of these applications.

To express the present invention, the invention has been appropriately and sufficiently described with reference to preferred embodiments and drawings, however modifications and variations of the embodiments can easily be made by those skilled in the art. Therefore these modifications and variations are included within the scope of the Claims, unless the level thereof departs from the scope of the rights stated in the Claims.

Industrial Applicability

According to the present invention, a drive mechanism and an imaging device using the drive mechanism can be provided.

**Claims**

1. A drive mechanism comprising:

   an ultrasonic linear actuator in which a rod, connected to a piezoelectric element, moves reciprocally in an axis direction in response to expansion/contraction of the piezoelectric element; and
   a moving body that engages with the rod with a prescribed frictional force so as to move in the axis direction of the rod, wherein
   the moving body includes a moving body main portion, and a pressing member which faces the moving body main portion and grips the rod between the pressing member and the moving body main portion, and
   the pressing member is an oscillatable plate spring member including: one end which is a pressing portion to press the rod; a substantially middle portion which engages with the moving body main portion; and the other end serving as a receive portion which receives a reactive force generated by the pressing portion pressing the rod after contacting the moving body main portion.

2. The drive mechanism according to Claim 1, wherein the moving body main portion is formed into an approximate rectangle,
   the ultrasonic linear actuator is disposed near one corner out of a plurality of corners of the rectangle, an engaging portion of the pressing member with the moving body main portion is disposed near a corner adjacent to the corner where the ultrasonic linear actuator is disposed, and
   the receive portion in the pressing member is disposed near a corner on a diagonal line from the corner where the ultrasonic linear actuator is disposed.

3. The drive mechanism according to Claim 2, wherein the engaging portion of the pressing member with the moving body main portion is configured in such a way that the moving body main portion is formed to be a plate form, the pressing member includes a pair of engaging pieces which grip the moving body main portion therebetween in a thickness direction,

**17**

and a boss, which is provided in a standing manner in one of the moving body main portion and the engaging pieces, fits into an engaging hole formed in the other of the moving body main portion and the engaging pieces, and

the boss is formed to be a columnar form having a curved lateral surface, and the engaging hole is formed to be a quadrangle into which the boss fits, and two pairs of opposite sides of the quadrangle are disposed to be parallel with a side on one end of the pressing member and a side on the other end of the pressing member respectively.

4. The drive mechanism according to Claim 2 or 3, wherein

the moving body main portion further includes, near the ultrasonic linear actuator, a regulating unit that regulates a pressing portion of the pressing member, engaged with the rod of the ultrasonic linear actuator, moving in the axis direction of the rod.

5. The drive mechanism according to any one of Claims 1 to 4, wherein

LCP or PPS added with an additive to increase hardness is used for a material of an engaging portion of the moving body main portion with the rod of the ultrasonic linear actuator.

6. A drive mechanism, comprising:

an ultrasonic linear actuator in which a rod, connected to a piezoelectric element, moves reciprocally in an axis direction in response to expansion/contraction of the piezoelectric element; and

a moving body that engages with the rod with a prescribed frictional force so as to move in the axis direction of the rod, wherein

the moving body includes a moving body main portion, and a pressing member which faces the moving body main portion and grips the rod between the pressing member and the moving body main portion,

the rod is formed to be a cylindrical form, and a contact portion of the moving body main portion with respect to the rod includes two sets of a pair of contact pieces which are disposed with an interval in a circumferential direction of the rod, these sets being disposed with an interval in the axis direction of the rod.

7. The drive mechanism according to Claim 6, wherein a contact length of each contact piece with the rod in the axis direction is 1/3 or less of a width of the contact portion.

8. The drive mechanism according to Claim 6 or 7, wherein

the contact positions of the pair of contact pieces with the rod are 120° apart from each other in the circumferential direction of the rod.

9. The drive mechanism according to Claim 8, wherein the pressing member is a flat plate spring.

10. The drive mechanism according to Claim 6 or 7, wherein

the pressing member includes a plate body of which cross-section perpendicular to the axis is V-shaped.

11. The drive mechanism according to any one of Claims 6 to 10, wherein

a contact length of the pressing member with the rod is 1/2 or less of a width of the contact portion.

12. The drive mechanism according to any one of Claims 6 to 10, wherein

a contact portion of the pressing member contacts the rod at a point in a substantially middle position of the contact portion of the moving body main portion.

13. The drive mechanism according to any one of Claims 6 to 10, wherein

a contact portion of the pressing member with the rod includes two sets of contact pieces which are disposed with an interval in the axis direction of the rod.

14. An imaging device comprising:

the drive mechanism according to any one of Claims 1 to 13; and
a fixed lens group, wherein
the moving body is a moving lens group.

# FIG.1

# FIG.2

# FIG.3

# FIG.4

FIG.5

# FIG.6

# FIG.7

FIG.8A

FIG.8B

EP 2 498 392 A1

# FIG.9

FIG.10

FIG.11A

FIG.11B

FIG.11C

FIG.11D

## FIG.12A

## FIG.12B

## FIG.12C

## FIG.12D

# FIG.13

EP 2 498 392 A1

# FIG.14

FIG.15

# FIG.16

FIG.17B

FIG.17A

# FIG.18

# FIG.19

# FIG.20

EP 2 498 392 A1

# FIG.21

# FIG.22

# FIG.23

# FIG.24

# FIG.25

302a
41
42
K0
K1 K3 K2
24
243a 243b
243

# FIG.26

# FIG.27

# FIG.28

# FIG.29

# FIG.30

FIG.31A

1111
1112
1113
1115
1114

FIG.31B

X
X

FIG.32

# FIG.33

1113

1112

1114    1111

## INTERNATIONAL SEARCH REPORT

| International application No. |
|---|
| PCT/JP2010/006246 |

**A. CLASSIFICATION OF SUBJECT MATTER**
*H02N2/00*(2006.01)i, *G02B7/04*(2006.01)i

According to International Patent Classification (IPC) or to both national classification and IPC

**B. FIELDS SEARCHED**

Minimum documentation searched (classification system followed by classification symbols)
H02N2/00, G02B7/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-129795 A (Konica Minolta Opto, Inc.), 24 May 2007 (24.05.2007), paragraphs [0020] to [0035]; fig. 1 & US 2007/0096601 A1  & KR 10-2007-0047220 A | 1-14 |
| A | JP 2005-354867 A (Fujinon Corp.), 22 December 2005 (22.12.2005), paragraphs [0023] to [0027]; fig. 2 & US 2005/0275315 A1  & EP 1605290 A2 | 1-14 |
| A | JP 2007-49878 A (Fujinon Corp.), 22 February 2007 (22.02.2007), paragraphs [0025] to [0035]; fig. 4 to 5 & US 2007/0035858 A1  & EP 1752806 A1 & DE 602006005112 D  & CN 1913325 A & AT 422678 T | 1-14 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 17 December, 2010 (17.12.10) | 28 December, 2010 (28.12.10) |

| Name and mailing address of the ISA/<br>Japanese Patent Office | Authorized officer |
|---|---|
| Facsimile No. | Telephone No. |

Form PCT/ISA/210 (second sheet) (July 2009)

<table>
<tr><td colspan="2" align="center">**INTERNATIONAL SEARCH REPORT**</td><td>International application No.<br>PCT/JP2010/006246</td></tr>
<tr><td colspan="3">C (Continuation). DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td>A</td><td>JP 2006-311794 A (Konica Minolta Opto, Inc.),<br>09 November 2006 (09.11.2006),<br>paragraph [0003]; fig. 2<br>& US 2006/0220497 A1</td><td>1-14</td></tr>
<tr><td>A</td><td>JP 2007-143344 A (Fujinon Corp.),<br>07 June 2007 (07.06.2007),<br>paragraphs [0017] to [0019]; fig. 1<br>(Family: none)</td><td>1-14</td></tr>
</table>

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007049878 A
- JP 2009124857 A
- JP 2006311794 A
- JP 2001268951 A
- JP 2009252794 A
- JP 2009252796 A